# EUROPEAN PATENT SPECIFICATION

(11) **EP 4 483 644 B1**
(45) Date of publication and mention of the grant of the patent: **29.07.2026**
(21) Application number: 23712421.9
(22) Date of filing: 23.02.2023
(51) Int. Cl.: H04W 64/00

(54) **CLOUD-CENTRIC DESIGN FOR HYBRID NEW RADIO (NR) AND ULTRA-WIDEBAND (UWB) POSITIONING**
CLOUD-ZENTRISCHER ENTWURF FÜR HYBRIDES NEW RADIO (NR) UND ULTRABREITBAND (UWB)-POSITIONIERUNG
CONCEPTION CENTRÉE SUR LE NUAGE POUR POSITIONNEMENT HYBRIDE NOUVELLE RADIO (NR) ET ULTRALARGE BANDE (UWB)

(30) Priority: 24.02.2022 GR 20220100167; 03.03.2022 GR 20220100197; 31.03.2022 GR 20220100287
(43) Date of publication of application: 01.01.2025
(73) Proprietor: QUALCOMM INCORPORATED, San Diego, California 92121-1714 (US)
(72) Inventor: REDDY, Varun Amar, San Diego, California 92121-1714 (US); MANOLAKOS, Alexandros, San Diego, California 92121-1714 (US); PAKROOH, Pooria, San Diego, California 92121-1714 (US); MUKKAVILLI, Krishna Kiran, San Diego, California 92121-1714 (US)
(74) Representative: Reddie & Grose LLP
(86) International application number: PCT/US2023/063176
(87) International publication number: WO 2023/164587

(56) References cited:
- WO-A1-2020/193853
- WO-A1-2022/016468
- CN-A- 112 788 533
- CN-A- 113 259 839
- ESA: "Considerations on RAT-dependent evaluation methodology", vol. RAN WG2, no. Spokane, US; 20181112 - 20181116, 11 November 2018 (2018-11-11), XP051555762, Retrieved from the Internet <URL:http://www.3gpp.org/ftp/Meetings%5F3GPP%5FSYNC/RAN1/Docs/R1%2D1813708%2Ezip> [retrieved on 20181111]

## Description

### BACKGROUND

### 1. Field of Disclosure

The present disclosure relates generally to the field of radiofrequency (RF)-based position determination (or positioning) of an electronic wireless device. More specifically, the present disclosure relates to ultra-wideband (UWB)-based and new radio (NR)-based positioning.

### 2. Description of Related Art

UWB-based positioning offers a highly accurate, low-power positioning solution relative to other RF-based positioning techniques for wireless electronic devices. UWB-based positioning can be used in industrial applications, such as by robots and/or other Internet of Things (IoT) devices in a factory setting, indoor positioning of consumer electronics, and more. New radio (NR)-based positioning provides for RF-based positioning of a mobile device (also known as a user equipment (UE)) in a cellular network. Patent document WO 2022/016468 A1 discusses a positioning measurement method including obtaining first configuration information and second configuration information that are sent by a first-type positioning node or a location management function entity, where the first configuration information is used to instruct the terminal to transmit and/or receive a first positioning signal for performing positioning measurement with the first-type positioning node, and the second configuration information is used to instruct the terminal to transmit and/or receive a second positioning signal for performing positioning measurement with a second-type positioning node.

### BRIEF SUMMARY

The invention is defined in the independent claims. Optional features are set out in the dependent claims..

### BRIEF DESCRIPTION OF THE DRAWINGS

The appended drawings are provided to complement the following description. It can be noted that the term "background" is included in the text of many of the appended drawings to provide context for the embodiments described herein. It does not necessarily follow, however, that such information should be considered prior art. Some information identified as background in the appended drawings may, in fact, comprise novel features used by one or more embodiments described herein.
FIG. 1 is a simplified illustration of a positioning system, according to an embodiment.
FIG. 2A and 2B are diagrams illustrating out both ultra-wideband (UWB) and Fifth Generation (5G) New Radio (NR) may be used for positioning a target device, according to some embodiments.
FIG. 3A and 3B are flow diagrams illustrating how UWB sessions may be coordinated and conducted, according to some embodiments.
FIG. 4A is an illustration of different packet configurations that can be used in a UWB session at the UWB physical (PHY) layer.
FIG. 4B is an illustration of a deterministic random bit generator that can be used to generate a scrambled timestamp sequence (STS), which may be used in some embodiments.
FIG. 5 is a diagram illustrating how time may be segmented and utilized within a UWB positioning session, which may be used in some embodiments
FIG. 6A and 6B are timing diagrams illustrating how contention-based ranging using a Contention Access Period (CAP) may be implemented, according to some embodiments.
FIG. 7A and 7B are timing diagrams illustrating how a responder management list (RML) may be used, according to an embodiment.
FIG. 8 is a timing diagram of a hybrid-based ranging round, provided to show how embodiments may implement a process for moving a UWB responder device from a CAP to a contention-free period (CFP).
FIG. 9 is a diagram of an example cloud-based infrastructure for hybrid NR/UWB ranging, according to an embodiment.
FIG. 10 is a message flow diagram illustrating an example process for device-based hybrid NR/UWB positioning, according to an embodiment.
FIG. 11 is a message flow diagram illustrating an example of a process for device-initiated, cloud-based hybrid NR/UWB positioning, according to an embodiment.
FIG. 12 is a message flow diagram illustrating an example of a process in which one or more NR/UWB devices can request a server to set up a UWB positioning session, according to an embodiment.
FIG. 13 is a message flow diagram illustrating an example process for network-initiated, cloud-based hybrid NR/UWB positioning, according to an embodiment.
FIG. 14 is a message flow diagram illustrating an example of how a server can set up a UWB positioning session, according to an embodiment.
FIG. 15 is a message flow diagram illustrating an example of how a server can determine a list of preferred anchor devices for hybrid NR/UWB positioning, according to an embodiment.
FIG. 16 is a flow diagram of a method of coordinating hybrid NR/UWB positioning sessions for a mobile device, according to an embodiment.
FIG. 17 is a flow diagram of another method of coordinating hybrid NR/UWB positioning sessions for a mobile device, according to an embodiment.
FIG. 18 is a block diagram of an embodiment of a mobile UWB device.
FIG. 19 is a block diagram of an embodiment of a stationary UWB device.
FIG. 20 is a block diagram of an embodiment of a computer system.

Like reference symbols in the various drawings indicate like elements, in accordance with certain example implementations. In addition, multiple instances of an element may be indicated by following a first number for the element with a letter or a hyphen and a second number. For example, multiple instances of an element 110 may be indicated as 110-1, 110-2, 110-3, etc., or as 110a, 110b, 110c, etc. When referring to such an element using only the first number, any instance of the element is to be understood (e.g., element 110 in the previous example would refer to elements 110-1, 110-2, and 110-3 or to elements 110a, 110b, and 110c).

### DETAILED DESCRIPTION

The following description is directed to certain implementations for the purposes of describing innovative aspects of various embodiments. However, a person having ordinary skill in the art will readily recognize that the teachings herein can be applied in a multitude of different ways. The described implementations may be implemented in any device, system, or network that is capable of transmitting and receiving radio frequency (RF) signals according to any communication standard, such as any of the Institute of Electrical and Electronics Engineers (IEEE) 802.15.4 standards for ultra-wideband (UWB), IEEE 802.11 standards (including those identified as Wi-Fi^{®} technologies), the Bluetooth^{®} standard, code division multiple access (CDMA), frequency division multiple access (FDMA), time division multiple access (TDMA), Global System for Mobile communications (GSM), GSM/General Packet Radio Service (GPRS), Enhanced Data GSM Environment (EDGE), Terrestrial Trunked Radio (TETRA), Wideband-CDMA (W-CDMA), Evolution Data Optimized (EV-DO), 1xEV-DO, EV-DO Rev A, EV-DO Rev B, High Rate Packet Data (HRPD), High Speed Packet Access (HSPA), High Speed Downlink Packet Access (HSDPA), High Speed Uplink Packet Access (HSUPA), Evolved High Speed Packet Access (HSPA+), Long Term Evolution (LTE), Advanced Mobile Phone System (AMPS), or other known signals that are used to communicate within a wireless, cellular or internet of things (IoT) network, such as a system utilizing 3G, 4G, 5G, 6G, or further implementations thereof, technology.

As used herein, an "RF signal" comprises an electromagnetic wave that transports information through the space between a transmitter (or transmitting device) and a receiver (or receiving device). As used herein, a transmitter may transmit a single "RF signal" or multiple "RF signals" to a receiver. However, the receiver may receive multiple "RF signals" corresponding to each transmitted RF signal due to the propagation characteristics of RF signals through multiple channels or paths.

Additionally, unless otherwise specified, references to "positioning reference signals," "reference signals for positioning," and the like may be used to refer to signals used for positioning of a mobile device, such as a UWB device. As described in more detail herein, such signals may comprise any of a variety of signal types. Additionally, unless otherwise specified, references to "sensing reference signals," "reference signals for sensing," and the like may be used to refer to signals used for RF sensing (also generically referred to herein as "sensing") as described herein. A signal used for RF sensing and/or positioning may be generally referred to herein as a reference signal (RS). As described in more detail herein, such signals may comprise any of a variety of signal types but may not necessarily be limited to signals solely used for RF sensing.

Further, unless otherwise specified, the term "positioning," "position determination," "location determination," "location estimation," and the like, as used herein may include absolute location determination, relative location determination, ranging, or a combination thereof. Such positioning may include and/or be based on timing, angular, phase, or power measurements, or a combination thereof (which may include RF sensing measurements) for the purpose of location or sensing services.

As previously noted, UWB-based positioning offers a highly accurate, low-power positioning solution relative to other RF-based positioning techniques for wireless electronic devices. UWB-based positioning can be used in industrial applications, such as by robots and/or other Internet of Things (IoT) devices in a factory setting, indoor positioning of consumer electronics, and more. One or more UWB positioning sessions (or simply "UWB sessions") may be conducted to perform the UWB-based positioning, and a given UWB device may have an opportunity to participate in several UWB sessions. A UWB device also may be connected with a cellular network, such as a 5G New Radio (NR) network, which may be referred to herein simply as an "NR network." Because UWB controllers that set up UWB sessions may be unaware of when the positioning of a UWB device (controlee) may be performed in an NR network (herein, "NR positioning"), a network of UWB devices may be subject to overall inefficiencies. Embodiments described herein address these and other issues by providing techniques by which an NR server (e.g., a Location Management Function (LMF)) and/or a UWB management server (also referred to herein as a connected intelligent edge (CIE)) can share information to provide configuration information to the various UWB controller devices, informed by NR information, to streamline UWB sessions.

Various aspects of this disclosure relate generally to UWB positioning or ranging. Some aspects more specifically relate to UWB session configuration in UWB positioning. In some examples, an NR server may leverage NR-related information regarding an NR/UWB device (capable of performing both NR and UWB positioning) to optimize the positioning of the NR/UWB device. According to some embodiments, the NR server may send information to a UWB server, which can use this information to optimize session configurations of one or more UWB controller devices or anchors. According to some embodiments, an NR server may keep a coarse position of an NR/UWB device to determine whether the NR/UWB device is within the coverage area of one or more UWB controller devices. Based on this information, the NR server can determine a list of preferred UWB controller devices, which can be used to optimize the setup of one or more UWB positioning sessions.

Particular aspects of the subject matter described in this disclosure can be implemented to realize one or more of the following potential advantages. In some examples, by providing for server-based UWB session configuration, the described techniques can be used to make more secure positioning of a device (e.g., if spoofing is detected in NR, a positioning session in UWB can be performed). Moreover, an NR server or device that coordinates UWB positioning when possible (e.g., to compliment or replace NR positioning) can see power and accuracy gains. These and other advantages will be apparent to a person of ordinary skill in the art in view of the embodiments described herein. Embodiments are described below, following a review of applicable technology.

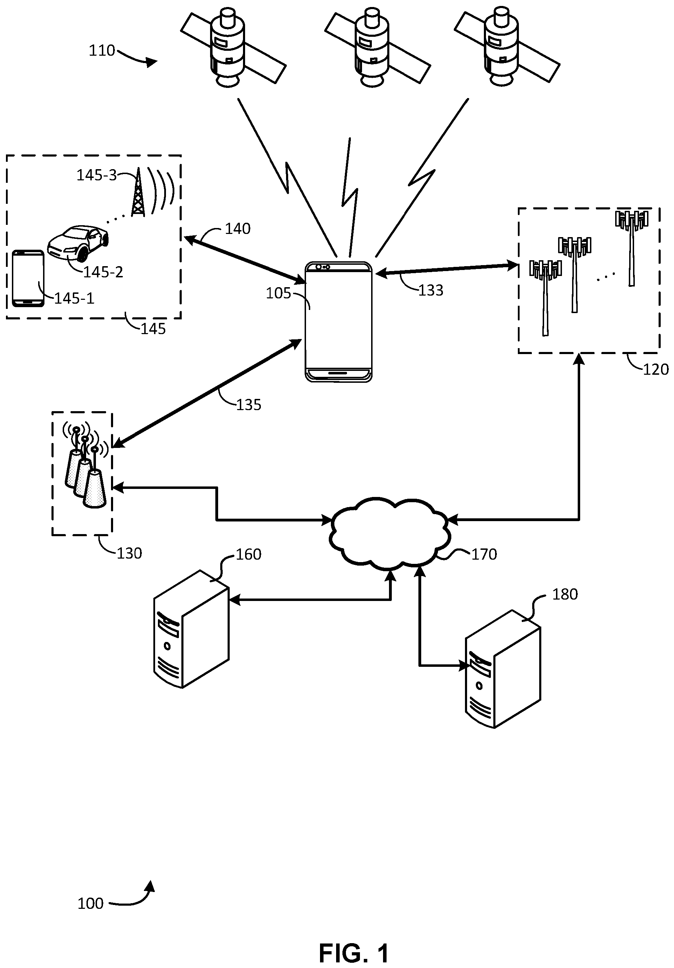

Although UWB-based positioning may be used in an ad hoc manner as a standalone positioning technique between electronic devices capable of UWB positioning (also referred to herein as "UWB devices"), in some embodiments UWB-based positioning may be used as one of many techniques for positioning an electronic device in a positioning system. FIG. 1 provides an example of such a positioning system.

**FIG. 1** is a simplified illustration of a positioning system 100 in which a mobile device 105, location server 160, and/or other components of the positioning system 100 can use the techniques provided herein for time alignment configuration for hybrid 5G and UWB positioning of mobile device 105, according to an embodiment. The techniques described herein may be implemented by one or more components of the positioning system 100. The positioning system 100 can include a mobile device 105; one or more satellites 110 (also referred to as space vehicles (SVs)) for a Global Navigation Satellite System (GNSS) such as the Global Positioning System (GPS), GLONASS, Galileo or Beidou; base stations 120; access points (APs) 130; location server 160; network 170; and external client 180. Generally put, the positioning system 100 can estimate the location of the mobile device 105 based on RF signals received by and/or sent from the mobile device 105 and known locations of other components (e.g., GNSS satellites 110, base stations 120, APs 130) transmitting and/or receiving the RF signals. Additional details regarding particular location estimation techniques are discussed hereafter.

It should be noted that FIG. 1 provides only a generalized illustration of various components, any or all of which may be utilized as appropriate, and each of which may be duplicated as necessary. Specifically, although only one mobile device 105 is illustrated, it will be understood that many mobile devices (e.g., hundreds, thousands, millions, etc.) may utilize the positioning system 100. Similarly, the positioning system 100 may include a larger or smaller number of base stations 120 and/or APs 130 than illustrated in FIG. 1. The illustrated connections that connect the various components in the positioning system 100 comprise data and signaling connections which may include additional (intermediary) components, direct or indirect physical and/or wireless connections, and/or additional networks. Furthermore, components may be rearranged, combined, separated, substituted, and/or omitted, depending on desired functionality. In some embodiments, for example, the external client 180 may be directly connected to location server 160. A person of ordinary skill in the art will recognize many modifications to the components illustrated.

Depending on desired functionality, the network 170 may comprise any of a variety of wireless and/or wireline networks. The network 170 can, for example, comprise any combination of public and/or private networks, local and/or wide-area networks, and the like. Furthermore, the network 170 may utilize one or more wired and/or wireless communication technologies. In some embodiments, the network 170 may comprise a cellular or other mobile network, a wireless local area network (WLAN), a wireless wide-area network (WWAN), and/or the Internet, for example. Examples of network 170 include an LTE wireless network, a Fifth Generation (5G) wireless network (also referred to as an NR wireless network or 5G NR wireless network), a Wi-Fi WLAN, and the Internet. LTE, 5G and NR are wireless technologies defined, or being defined, by the 3rd Generation Partnership Project (3GPP). Network 170 may also include more than one network and/or more than one type of network. In a wireless cellular network (e.g., LTE or 5G), the mobile device 105 may be referred to as a user equipment (UE).

The base stations 120 and access points (APs) 130 may be communicatively coupled to the network 170. In some embodiments, the base station 120s may be owned, maintained, and/or operated by a cellular network provider, and may employ any of a variety of wireless technologies, as described herein below. Depending on the technology of the network 170, a base station 120 may comprise a node B, an Evolved Node B (eNodeB or eNB), a base transceiver station (BTS), a radio base station (RBS), an NR NodeB (gNB), a Next Generation eNB (ng-eNB), or the like. A base station 120 that is a gNB or ng-eNB may be part of a Next Generation Radio Access Network (NG-RAN) which may connect to a 5G Core Network (5GC) in the case that Network 170 is a 5G network. The functionality performed by a base station 120 in earlier-generation networks (e.g., 3G and 4G) may be separated into different functional components (e.g., radio units (RUs), distributed units (DUs), and central units (CUs)) and layers (e.g., L1/L2/L3) in view Open Radio Access Networks (O-RAN) and/or Virtualized Radio Access Network (V-RAN or vRAN) in 5G or later networks, which may be executed on different devices at different locations connected, for example, via fronthaul, midhaul, and backhaul connections. As referred to herein, a "base station" (or ng-eNB, gNB, etc.) may include any or all of these functional components. An AP 130 may comprise a Wi-Fi AP or a Bluetooth^{®} AP or an AP having cellular capabilities (e.g., 4G LTE and/or 5G NR), for example. Thus, mobile device 105 can send and receive information with network-connected devices, such as location server 160, by accessing the network 170 via a base station 120 using a first communication link 133. Additionally or alternatively, because APs 130 also may be communicatively coupled with the network 170, mobile device 105 may communicate with network-connected and Internet-connected devices, including location server 160, using a second communication link 135, or via one or more other mobile devices 145.

As used herein, the term "base station" may generically refer to a single physical transmission point, or multiple co-located physical transmission points, which may be located at a base station 120. A Transmission Reception Point (TRP) (also known as transmit/receive point) corresponds to this type of transmission point, and the term "TRP" may be used interchangeably herein with the terms "gNB," "ng-eNB," and "base station." In some cases, a base station 120 may comprise multiple TRPs - e.g. with each TRP associated with a different antenna or a different antenna array for the base station 120. As used herein, the transmission functionality of a TRP may be performed with a transmission point (TP) and/or the reception functionality of a TRP may be performed by a reception point (RP), which may be physically separate or distinct from a TP. That said, a TRP may comprise both a TP and an RP. Physical transmission points may comprise an array of antennas of a base station 120 (e.g., as in a Multiple Input-Multiple Output (MIMO) system and/or where the base station employs beamforming). The term "base station" may additionally refer to multiple non-co-located physical transmission points, the physical transmission points may be a Distributed Antenna System (DAS) (a network of spatially separated antennas connected to a common source via a transport medium) or a Remote Radio Head (RRH) (a remote base station connected to a serving base station).

As used herein, the term "cell" may generically refer to a logical communication entity used for communication with a base station 120 and may be associated with an identifier for distinguishing neighboring cells (e.g., a Physical Cell Identifier (PCID), a Virtual Cell Identifier (VCID)) operating via the same or a different carrier. In some examples, a carrier may support multiple cells, and different cells may be configured according to different protocol types (e.g., Machine-Type Communication (MTC), Narrowband Internet-of-Things (NB-IoT), Enhanced Mobile Broadband (eMBB), or others) that may provide access for different types of devices. In some cases, the term "cell" may refer to a portion of a geographic coverage area (e.g., a sector) over which the logical entity operates.

Satellites 110 may be utilized for positioning of the mobile device 105 in one or more ways. For example, satellites 110 (also referred to as space vehicles (SVs)) may be part of a GNSS such as GPS, GLONASS, Galileo or Beidou. Positioning using RF signals from GNSS satellites may comprise measuring multiple GNSS signals at a GNSS receiver of the mobile device 105 to perform code-based and/or carrier-based positioning, which can be highly accurate. Additionally or alternatively, satellites 110 may be utilized for Non-Terrestrial Network (NTN)-based positioning, in which satellites 110 may functionally operate as TRPs (or TPs) of a network (e.g., LTE and/or NR network) and may be communicatively coupled with network 170. In particular, reference signals (e.g., PRS) transmitted by satellites 110 NTN-based positioning may be similar to those transmitted by base stations 120 and may be coordinated by a location server 160. In some embodiments, satellites 110 used for NTN-based positioning may be different than those used for GNSS-based positioning.

The location server 160 may comprise a server and/or other computing device configured to determine an estimated location of mobile device 105 and/or provide data (e.g., "assistance data") to mobile device 105 to facilitate location measurement and/or location determination by mobile device 105. According to some embodiments, location server 160 may comprise a Home Secure User Plane Location (SUPL) Location Platform (H-SLP), which may support the SUPL user plane (UP) location solution defined by the Open Mobile Alliance (OMA) and may support location services for mobile device 105 based on subscription information for mobile device 105 stored in location server 160. In some embodiments, the location server 160 may comprise, a Discovered SLP (D-SLP) or an Emergency SLP (E-SLP). The location server 160 may also comprise an Enhanced Serving Mobile Location Center (E-SMLC) that supports location of mobile device 105 using a control plane (CP) location solution for LTE radio access by mobile device 105. The location server 160 may further comprise a Location Management Function (LMF) that supports location of mobile device 105 using a control plane (CP) location solution for NR or LTE radio access by mobile device 105.

In a CP location solution, signaling to control and manage the location of mobile device 105 may be exchanged between elements of network 170 and with mobile device 105 using existing network interfaces and protocols and as signaling from the perspective of network 170. In a UP location solution, signaling to control and manage the location of mobile device 105 may be exchanged between location server 160 and mobile device 105 as data (e.g. data transported using the Internet Protocol (IP) and/or Transmission Control Protocol (TCP)) from the perspective of network 170.

As previously noted (and discussed in more detail below), the estimated location of mobile device 105 may be based on measurements of RF signals sent from and/or received by the mobile device 105. In particular, these measurements can provide information regarding the relative distance and/or angle of the mobile device 105 from one or more components in the positioning system 100 (e.g., GNSS satellites 110, APs 130, base stations 120). The estimated location of the mobile device 105 can be estimated geometrically (e.g., using multiangulation and/or multilateration), based on the distance and/or angle measurements, along with known position of the one or more components.

Although terrestrial components such as APs 130 and base stations 120 may be fixed, embodiments are not so limited. Mobile components may be used. For example, in some embodiments, a location of the mobile device 105 may be estimated at least in part based on measurements of RF signals 140 communicated between the mobile device 105 and one or more other mobile devices 145, which may be mobile or fixed. As illustrated, other mobile devices may include, for example, a mobile phone 145-1, vehicle 145-2, static communication/positioning device 145-3, or other static and/or mobile device capable of providing wireless signals used for positioning the mobile device 105, or a combination thereof. Wireless signals from mobile devices 145 used for positioning of the mobile device 105 may comprise RF signals using, for example, Bluetooth^{®} (including Bluetooth Low Energy (BLE)), IEEE 802.11x (e.g., Wi-Fi^{®}), ultra-wideband (UWB), IEEE 802.15x, or a combination thereof. Mobile devices 145 may additionally or alternatively use non-RF wireless signals for positioning of the mobile device 105, such as infrared signals or other optical technologies.

Mobile devices 145 may comprise other mobile devices communicatively coupled with a cellular or other mobile network (e.g., network 170). When one or more other mobile devices 145 are used in the position determination of a particular mobile device 105, the mobile device 105 for which the position is to be determined may be referred to as the "target mobile device," and each of the other mobile devices 145 used may be referred to as an "anchor mobile device." (In a cellular/mobile broadband network, the terms "anchor UE" and "target UE" may be used.) For position determination of a target mobile device, the respective positions of the one or more anchor mobile devices may be known and/or jointly determined with the target mobile device. Direct communication between the one or more other mobile devices 145 and mobile device 105 may comprise sidelink and/or similar Device-to-Device (D2D) communication technologies. Sidelink, which is defined by 3GPP, is a form of D2D communication under the cellular-based LTE and NR standards. UWB may be one such technology by which the positioning of a target device (e.g., mobile device 105) may be facilitated using measurements from one or more anchor devices (e.g., mobile devices 145).

According to some embodiments, such as when the mobile device 105 comprises and/or is incorporated into a vehicle, a form of D2D communication used by the mobile device 105 may comprise vehicle-to-everything (V2X) communication. V2X is a communication standard for vehicles and related entities to exchange information regarding a traffic environment. V2X can include vehicle-to-vehicle (V2V) communication between V2X-capable vehicles, vehicle-to-infrastructure (V2I) communication between the vehicle and infrastructure-based devices (commonly termed roadside units (RSUs)), vehicle-to-person (V2P) communication between vehicles and nearby people (pedestrians, cyclists, and other road users), and the like. Further, V2X can use any of a variety of wireless RF communication technologies. Cellular V2X (CV2X), for example, is a form of V2X that uses cellular-based communication such as LTE (4G), NR (5G) and/or other cellular technologies in a direct-communication mode as defined by 3GPP. The mobile device 105 illustrated in FIG. 1 may correspond to a component or device on a vehicle, RSU, or other V2X entity that is used to communicate V2X messages. In embodiments in which V2X is used, the static communication/positioning device 145-3 (which may correspond with an RSU) and/or the vehicle 145-2, therefore, may communicate with the mobile device 105 and may be used to determine the position of the mobile device 105 using techniques similar to those used by base stations 120 and/or APs 130 (e.g., using multiangulation and/or multilateration). It can be further noted that mobile devices 145 (which may include V2X devices), base stations 120, and/or APs 130 may be used together (e.g., in a WWAN positioning solution) to determine the position of the mobile device 105, according to some embodiments.

An estimated location of mobile device 105 can be used in a variety of applications - e.g. to assist direction finding or navigation for a user of mobile device 105 or to assist another user (e.g. associated with external client 180) to locate mobile device 105. A "location" is also referred to herein as a "location estimate", "estimated location", "location", "position", "position estimate", "position fix", "estimated position", "location fix" or "fix". The process of determining a location may be referred to as "positioning," "position determination," "location determination," or the like. A location of mobile device 105 may comprise an absolute location of mobile device 105 (e.g. a latitude and longitude and possibly altitude) or a relative location of mobile device 105 (e.g. a location expressed as distances north or south, east or west and possibly above or below some other known fixed location (including, e.g., the location of a base station 120 or AP 130) or some other location such as a location for mobile device 105 at some known previous time, or a location of a mobile device 145 (e.g., another mobile device) at some known previous time). A location may be specified as a geodetic location comprising coordinates which may be absolute (e.g. latitude, longitude and optionally altitude), relative (e.g. relative to some known absolute location) or local (e.g. X, Y and optionally Z coordinates according to a coordinate system defined relative to a local area such a factory, warehouse, college campus, shopping mall, sports stadium, or convention center). A location may instead be a civic location and may then comprise one or more of a street address (e.g. including names or labels for a country, state, county, city, road and/or street, and/or a road or street number), and/or a label or name for a place, building, portion of a building, floor of a building, and/or room inside a building etc. A location may further include an uncertainty or error indication, such as a horizontal and possibly vertical distance by which the location is expected to be in error or an indication of an area or volume (e.g. a circle or ellipse) within which mobile device 105 is expected to be located with some level of confidence (e.g. 95% confidence).

The external client 180 may be a web server or remote application that may have some association with mobile device 105 (e.g. may be accessed by a user of mobile device 105) or may be a server, application, or computer system providing a location service to some other user or users which may include obtaining and providing the location of mobile device 105 (e.g. to enable a service such as friend or relative finder, or child or pet location). Additionally or alternatively, the external client 180 may obtain and provide the location of mobile device 105 to an emergency services provider, government agency, etc.

As noted, positioning of the mobile device 105 may be facilitated by a location server 160, which may be part of a cellular network. Additionally or alternatively, the location server 160 may be capable of facilitating other types of network-based positioning, including positioning using APs 130 (e.g., Wi-Fi positioning) and/or mobile devices 145 (e.g., Bluetooth positioning, UWB positioning, etc.). To do so, the location server 160 may communicate with one or more devices (e.g., a target device such as the mobile device 105 and/or one or more anchor devices), coordinate positioning sessions with the one or more devices, provide assistance data for positioning-related measurements and/or calculations, receive measurement data from one or more devices for determining a position of a target device, provide synchronization-related data, or perform a combination these tasks, for example. According to some embodiments, the location server 160 may support various procedures/methods such as Assisted GNSS (A-GNSS), Time Difference Of Arrival (TDoA) (which also may be referred to as Observed Time Difference Of Arrival (OTDoA)), Real Time Kinematic (RTK), Precise Point Positioning (PPP), Differential GNSS (DGNSS), Enhance Cell ID (ECID), angle of arrival (AoA), angle of departure (AoD), WLAN positioning, RTT, multi-cell RTT, two-way ranging (TWR) (e.g., including single-sided TWR (SS-TWR) and/or double-sided TWR (DS-TWR)), and/or other positioning procedures and methods. The location server 160 may process location service requests for the mobile device 105 and/or third parties (e.g., a device communicatively coupled with the location server 160 and authorized to receive a position of the mobile device 105).

To support various positioning procedures/methods, the mobile device 105 and/or one or more anchor devices may be capable of performing any of a variety of measurements and/or procedures. This can include, for example, Received Signal Strength Indicator (RSSI), RTT, Reference Signal Received Power (RSRP), Reference Signal Received Quality (RSRQ), Reference Signal Time Difference (RSTD), Time of Arrival (ToA), AoA, Receive Time-Transmission Time Difference (Rx-Tx), Differential AoA (DAoA), AoD, or Timing Advance (TA).

In some embodiments, TDoA assistance data may be provided to a mobile device 105 by the location server 160 for a reference signal and one or more response or neighbor signals, relative to the reference signal. For example, the assistance data may provide timing, frequency, and/or other parameters of the reference and response/neighbor signals to allow a device (e.g., a target and/or anchor) to perform ToA and/or RSTD measurements for TDoA positioning. Using the RSTD measurements, the known absolute or relative transmission timing of each cell, and the known position(s) of wireless node physical transmitting antennas (e.g., anchors) for the reference and response/neighbor signals, the UE position may be calculated (e.g., by the mobile device 105 or by the location server 160). More particularly, the RSTD for a neighbor signal "*k*" relative to a reference signal "Ref," may be given as (ToA*ₖ* - ToA*_{Ref}*). ToA measurements for different signals may then be converted to RSTD measurements and sent to the location server 160 by the mobile device 105. Using (i) the RSTD measurements, (ii) the known absolute or relative transmission timing of each cell, (iii) the known position(s) of physical transmitting antennas that transmit the reference and response/neighbor signals, and/or (iv) directional characteristics of the signals such as a direction of transmission, the mobile device 105 position may be determined.

With regard to UWB-based positioning, UWB devices may conduct "sessions" during which the devices engage in direct communications (e.g., D2D communications) to coordinate the exchange of ranging frames from which ToA may be determined. Additional details regarding the sessions are provided below.

UWB devices may vary in form and function. As indicated in FIG. 1, a UWB device may comprise a mobile device such as a mobile phone with UWB functionality. Similarly, UWB devices may comprise other personal electronics, such as laptops, tablets, personal media players, or the like. Further, as noted, UWB devices may comprise vehicles, drones, robots, or other mobile devices that may move autonomously, and may be used in consumer, industrial, military, and/or other applications. UWB devices may also comprise tracking devices used in logistical applications to track packages, shipping containers, or the like. UWB devices may be used in proximity applications to, for example, unlock the door as a user (e.g., an authorized user) approaches. UWB devices may also be used in other applications and/or device types.

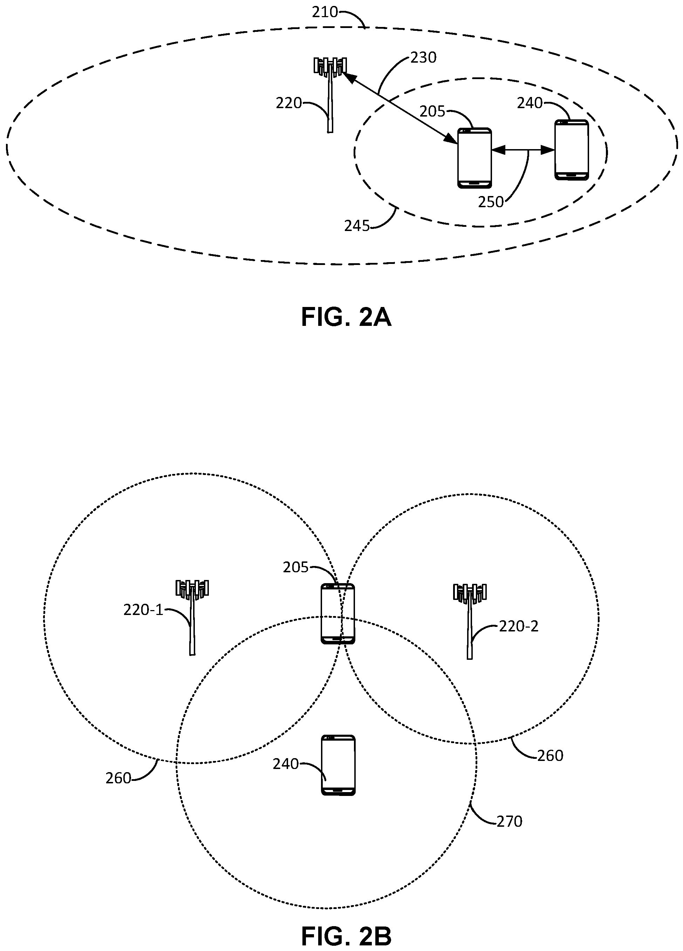

**FIG. 2A** is a diagram illustrating a scenario in which both UWB and cellular (5G NR) technologies may be used for positioning a target device 205. Here, target device 205 may correspond with mobile device 105 of FIG. 1. Generally put, according to some embodiments, the hybrid cellular/UWB positioning (or simply "cellular/UWB positioning") of a device may utilize both cellular and UWB positioning technologies to determine the location of a device that is capable of taking positioning-related measurements in both cellular and UWB technologies. The use of both cellular and UWB technologies may utilize additional anchors (cellular and/or UWB anchors) for positioning measurements, which can allow for positioning of a device in situations where the use of a single technology would not, and/or increased accuracy over the use of a single technology. Hybrid cellular/UWB positioning (not to be confused with hybrid UWB positioning/hybrid-based ranging described below) also may be referred to as "5G/UWB" or "NR/UWB" positioning where cellular technology comprises 5G NR.

In this scenario, a target device 205 may comprise a UE of the cellular network within a coverage region 210 of a base station 220, which may comprise a serving base station of the target device 205. Communication between the base station 220 and target device 205 may occur across a network (Uu) interface 230, which may also be used to communicate DL and/or UL reference signals for cellular aspects of cellular/UWB positioning. According to some embodiments, the positioning of the target device 205 may be coordinated by the network via a location server (not shown), and related configuration data and/or assistance data may be related to the target device 205 by the base station 220 via the network interface 230.

The UWB aspects of cellular/UWB positioning, the target device 205 may send and/or receive UWB RF signals from UWB device 240, acting as a UWB anchor. The UWB RF signals may be coordinated using an out of band (OOB) interface 250, which may utilize Bluetooth, Wi-Fi, or similar wireless technology, for example, which may have a corresponding wireless coverage region 245. According to some embodiments, the UWB aspects of cellular/UWB positioning may be coordinated by the target device 205 and/or UWB device 240, or maybe coordinated by location server (e.g., LMF) or other server (not shown). In some embodiments, configuration data and/or assistance data may be provided to a target device 205 and/or UWB device 240 directly by the base station 220. In some embodiments, configuration data and/or assistance data may be provided to a target device 205 directly by the base station 220 (e.g., via the network interface 230), and the target device 205 may relay the configuration data and/or assistance data to the UWB device 240 (e.g., via the OOB interface 250.

It can be noted that, although a single base station 220 and a single UWB device 240 are illustrated in FIG. 2, scenarios in which cellular/UWB positioning of a target device 205 may include one or more base stations and one or more UWB devices.

**FIG. 2B** is a simplified diagram illustrating how positioning of the target device 205 may be performed, according to some embodiments. Here, measurements using cellular technology may comprise round trip signal propagation delay (RTT) measurements performed between the target device 205 and each of a first base station 220-1 and a second base station 220-2 to determine a distance between the target device 205 and the base stations 220. (These distances are represented by circles 260.) Additionally, as indicated, measurements and UWB may comprise RTT measurements (also referred to as two-way ranging (TWR) in UWB) performed to determine a distance between the target device 205 and one or more UWB anchors, such as UWB device 240. (The distance between the target device 205 and the UWB device 240 is represented by circles 270.) Using multilateration, the location of the target device 205 may be determined as location in which circles representing the distances (circles 260 and 270) intersect. Because the distances may have some uncertainty, the resulting location of the location of the target device 205 also may have some uncertainty.

UWB-based positioning, including cellular/UWB positioning as described herein, may be used in a variety of applications. This may include access control (ranging-based services), such as residential and enterprise access control, parking garage access, vehicle digital car key applications (e.g., specified by Car Connectivity Consortium^{®} (CCC) standard), smart transportation and/or smart retail (unmanned store access), industry, healthcare, or the like. Some applications may include location/position-based services, such as emergency services/disaster management, vehicular traffic management (e.g., vehicular positioning, bike sharing), transportation (e.g., ride sharing, reserved seat validation), augmented reality/virtual reality (AR/VR) gaming/multimedia, smart retail (e.g., indoor navigation, foot traffic analytics), healthcare (e.g., asset and patient tracking/monitoring), or the like. Some applications may Device-to-Device (D2D) data-based applications such as conference call systems, drone coordination, data applications such as ticket validation, payment validation, patient data sharing in healthcare, AR/VR gaming/multimedia, or the like.

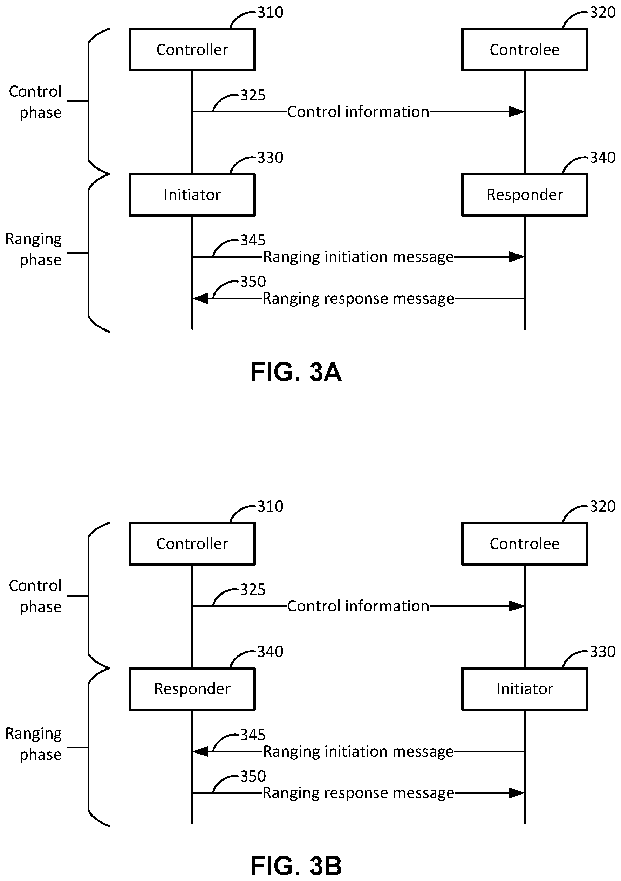

**FIG. 3A** is a flow diagram illustrating the roles different devices may assume with regard to a UWB ranging session (or simply a "UWB session"). Here, each UWB device may be referred to as an enhanced ranging device (ERDEV). ERDEVs may be referred to different terminologies (e.g. initiator/responder or controller/controlee) at different layers of the network stack. The terms initiator and responder (described hereafter) would be used at lower layers (e.g., at UWB physical (PHY) and media access control (MAC) layers), while the terms controller and controlee (also described hereafter) may be used at higher layers (e.g., an application layer of the ERDEVs). Here, either ERDEV may correspond with a target device 205 or UWB device 240 of FIG. 2, or mobile device 105 of FIG. 1.

As indicated, for a pair of ERDEVs communicating with each other, the controller 310 is an ERDEV that sends control information 325 to a receiving ERDEV, designated as the controlee 320. The control information 325 may include parameters for the UWB ranging session, such as timing, channel, etc. Although not illustrated, the controlee 320 can send acknowledgment to the control information 325, may negotiate changes to the parameters, and/or the like.

The exchange between controller 310 and controlee 320, including the sending of the control information 325 and subsequent related exchanges between controller 310 and controlee 320 regarding control information, may be conducted out of band (OOB) using a different wireless communication technology (e.g., Bluetooth or Wi-Fi), prior to a ranging phase. Put differently, a UWB session may be associated with a control phase and a ranging phase, where the control phase (which may take place on an OOB link) comprises a preliminary exchange between controller 310 and controlee 320 of parameter values for the ranging phase, and the subsequent ranging phase comprises the portion of the UWB session in which devices exchange messages within the UWB band for ranging measurements. (It can be noted, however, that some control information may be exchanged within the UWB band (e.g., a "ranging control phase" occurring in the first slot of a UWB round. Accordingly, some aspects of the control phase may be considered to occur in band, subsequent to the preliminary OOB exchange between the controller 310 and controlee 320.)

The UWB session may occur afterward, in accordance with the parameters provided in the control information. In the ranging phase of the UWB session, one ERDEV may take the role of an initiator 330 and the other ERDEV may take the role of a responder 340. As indicated in FIG. 3A, the initiator 330 may initiate UWB ranging by sending a ranging initiation message 345 to the responder 340, to which the responder 340 may reply with a ranging response message 350, and timing measurements may be made of these messages (by the devices receiving the messages) to perform two-way ranging (TWR). Depending on the parameters of the control information 325, additional exchanges may be made in the ranging phase between the initiator 330 and responder 340 to allow for additional ranging measurements.

The roles of initiator 330 and responder 340 may be indicated in the control information 325. Further, as indicated in FIG. 3A, the controller 310 in the control phase may be the initiator 330 in the ranging phase of the UWB session. Alternatively, as indicated in **FIG. 3B****,** the controller 310 in the control phase may be the responder 340 in the ranging phase. The determination of which device is initiator 330 and which is responder 340 may depend on the parameters set forth in the control information 325, in which case the controlee 320 correspondingly becomes either the responder 340 or the initiator 330. According to some embodiments, a controller/initiator may conduct ranging with multiple controlees/responders.

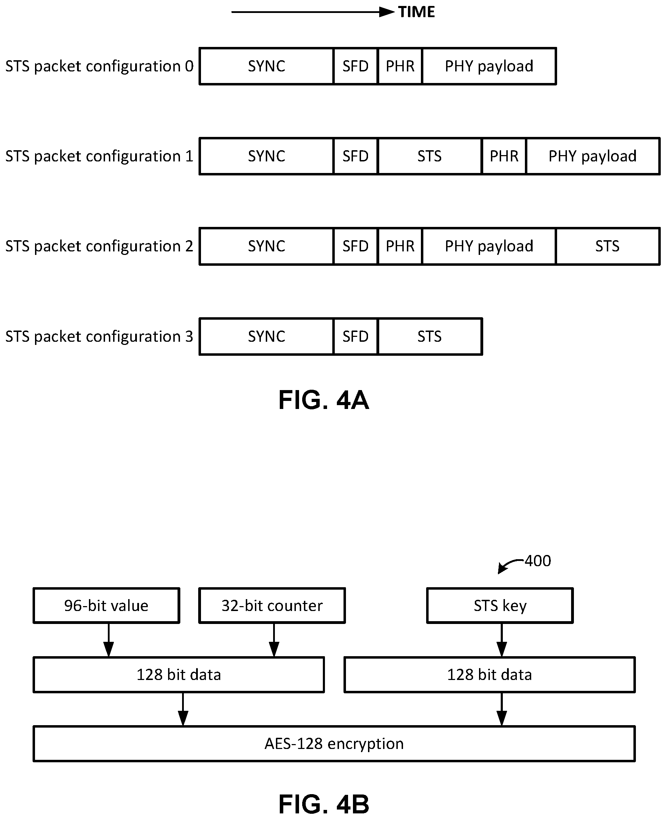

Embodiments herein may help ensure UWB measurements and cellular measurements cellular/UWB positioning are aligned in the time domain to accurately reflect the position (e.g., at a given time) of a target UE. To do this, embodiments provide for coordination of measurements between cellular reference signals and UWB positioning sessions. FIG. 4 illustrates how this coordination may be performed, according to some embodiments.

**FIG. 4A** is an illustration of different packet configurations that can be used in a UWB session (e.g., for sensing and/or positioning) at the UWB PHY layer, which may be used in some embodiments (e.g., in ranging initiation and/or response messages, as shown in FIGS. 3A and 3B above). These packet configurations may be defined and/or used in relevant UWB standards (e.g., IEEE 802.15.4z). As shown, ranging functionality may be based on channel estimation using the SYNC preamble, included in each of the for possible configurations (e.g., configurations 0-3) used in current configurations. (Configuration 0 is currently used as a default configuration.) The SYNC preamble may comprise a bit sequence (such as a Ipatov ternary sequence, Gold sequence, Golay sequence, polyphase sequence like Zadoff-Chu sequence, etc.) that exhibits good autocorrelation properties (e.g., sufficient for ranging/sensing measurements). As illustrated, the different packet configurations may also include a start of frame delimiter (SFD) to help demarcated the SYNC preamble from the rest of the packet, a PHY payload for conveying data (e.g., for communication, time stamp information, etc.), and/or a scrambled timestamp sequence (STS). The STS is a security feature with a unique sequence known to transmitter and receiver, which can authenticate the data packet source and help prevent over-the-air attacks that can falsify a ToA estimate for ranging/sensing in a UWB session. This aspect of UWB ranging/sensing is described in more detail with regard to FIG. 4B.

**FIG. 4B** is an illustration of a deterministic random bit generator (DRBG) 400 that can be used to generate an STS, which may be used in some embodiments (e.g., to generate the STS as shown in FIG. 4A). Here, the DRBG 400 is based on Advanced Encryption Standard (AES)-128 in counter mode. As illustrated, the DRBG 400 uses a 96-bit value, a 32-bit counter, and an STS key. The STS key may be exchanged securely between ERDEVs (e.g., an initiator and one or more responders) prior to the UWB session. For example, an STS key may be provided by the controller (e.g., controller 310 of FIGS. 3A or 3B), for example, at the application layer over a secure link (e.g., an OOB link). DRBG bits {0,1} may be mapped to {+1,-1} and spread. This can result in a ternary sequence of {-1,0,+1} chips. The ternary sequences may then be grouped (e.g., group of 32) to form an active STS segment.

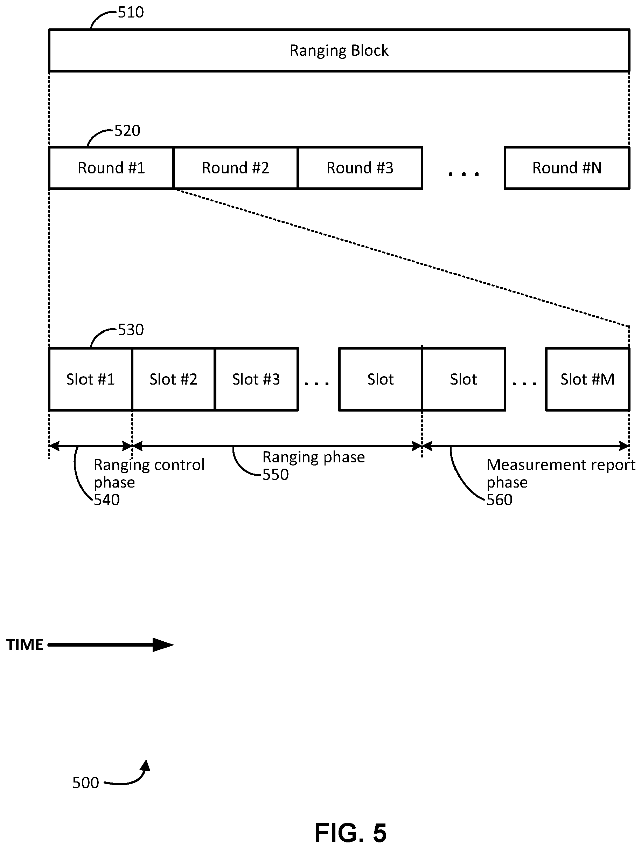

**FIG. 5** is a diagram 500 illustrating how time may be segmented and utilized within a UWB positioning session, which may be used in some embodiments. A UWB session may occur over a period of time divided into sub-portions according to a hierarchical structure. This timing comprises one or more consecutive ranging blocks 510, which may have a configurable duration (e.g., 200 ms). (For simplicity, only one ranging block 510 is shown in FIG. 5. However, a UWB session may utilize multiple blocks, which may occur in succession. Also, although called "ranging" blocks 510, they may be used for ranging and/or sensing.) Each ranging block 510 may be split into one or more successive rounds 520 (e.g., N rounds). The number and length of the rounds may be configurable. The rounds 520 may be further split into different slots 530, which also may have a configurable number and length (e.g., 1-2 ms). According to some embodiments, multiple rounds may be used for interference handling. For example, a given responder may transmit a message within only a single round per block, and the round index may either be statistically configured by the controller or selected per a hopping pattern.

The slots within a round 520 may be allocated for different purposes. For example, the initial slot may be dedicated as the ranging control phase 540, in which an initiator UWB device (e.g., an initiator anchor), transmits control information for the other UWB devices participating in a UWB session (e.g., responder anchors and/or other UWB devices). This information can include, for example, an allocation of slots among the different responder devices. During the subsequent ranging phase 550, the different responder may transmit in accordance with the allocated slot. That is, each responder may be allocated a corresponding slot in the ranging phase 550 to transmit one or more ranging/sensing signals, which may be used to perform SS-TWR or DS-TWR, for example. The ranging phase 550 may be followed by a measurement report phase 560 in which UWB anchors in a cluster may report measurements (e.g., of signals measured during the ranging phase 550). The structure of the initiation and/or response messages may use the PHY format previously described with respect to FIG. 4A. Multiple UWB sessions can be time multiplexed to prevent interference with one another.

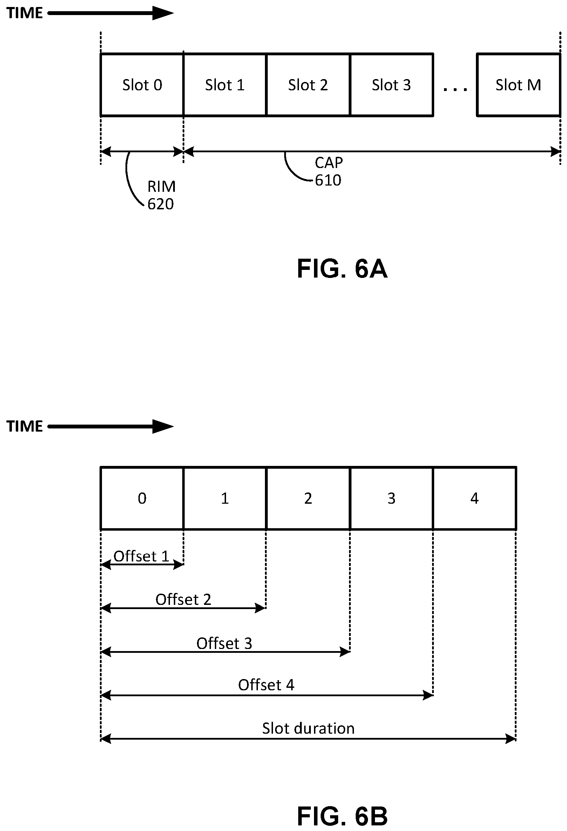

**FIGS. 6A and 6B** are timing diagrams illustrating how contention-based ranging using a Contention Access Period (CAP) 610 may be implemented, according to some embodiments. The CAP 610 may be preceded by a ranging initiation message (RIM) 620 (e.g., sent by the initiator). Contention-based ranging may be used, for example, when the controller does not know about the devices that will participate in the UWB Session. In such instances, the controller may always assume the role of the initiator and the controlees (e.g., one or more responding devices that will participate in the session) may always assume the role of the responders. To allow multiple controlee/responders to participate in the UWB session, the controller may advertise a CAP 610, which comprises a portion of slots within the ranging round. (Contents of the message advertising the CAP 610 may include parameters that may be chosen by the controller/initiator.) Essentially, the CAP 610 indicates slots within the round in which a controlee/responder may communicate to participate in the UWB session.

Devices that receive the message advertising the CAP 610 (e.g., potential controlees/responders) may respond based on, for example, rules implemented by the devices for participating in such ranging sessions. In particular, any controlee/responder that wants to participate in the UWB session a randomly select a slot of the CAP (e.g., which may be designated as slots 1 to M in each round, as indicated in FIG. 6A) and transmit a ranging message during the selected slot. Thus, the fewer controlee/responder responses and/or the larger the value for M, the less likely collisions are to occur.

According to some embodiments, each controlee/responder may also transmit after a random time offset within a slot. FIG. 6B illustrates example offsets for a slot. The allowable values for such a time offset are also contained within the control message. Once the controller has determined the identity of devices (e.g., using a responder management list (RML)) after a contention-based round, it can reserve some of the slots for those devices that were able to send a message in the preceding round. The remaining slots in the CAP 610 (up to M) may continue to serve as slots that can be randomly selected by other unknown devices. Thus, for a controlee/responder, access to the UWB session may be random access until the controlee/responder is recognized by the controller/initiator and included on the RML, after which the controlee/responder is given a dedicated slot for communication.

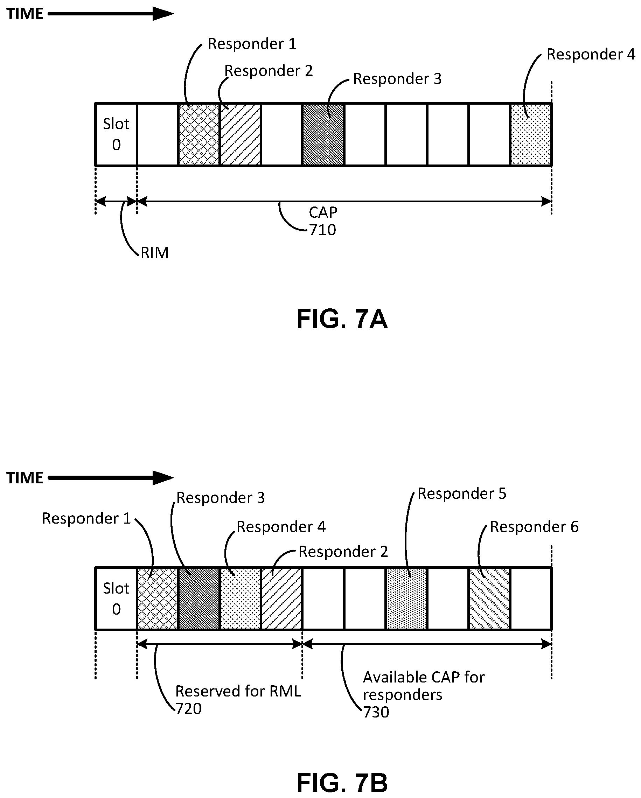

**FIGS. 7A and 7B** are timing diagrams illustrating how RML may be used, according to an embodiment. Here, FIG. 7A shows slots of a first round (or CAP portion of a round), and FIG. 7B shows slots of a subsequent round. The round in FIG. 7B may immediately follow the round in FIG. 7A (e.g., FIG 7A shows round i, and FIG. 7B shows round i+1), but that may not necessarily be the case. (E.g., there may be one or more intervening rounds.) Once the controller has learned the identity of UWB devices (Responders 1-4) after the CAP 710 round of FIG. 7A, it can split the CAP of the subsequent round into a reserved portion 720 for the identified UWB devices, and the remaining slots 730 in the CAP are available for additional responding UWB devices (e.g., Responders 5 and 6). Generally put, the controller may add responding devices to the RML, and may further reserve a portion of a CAP in a subsequent round for devices on the RML. As the number of devices on the RML increases, the number of remaining available slots in the CAP may decrease.

According to some embodiments, "hybrid-based ranging" (not to be confused with hybrid cellular/UWB positioning) may be utilized in UWB, in which rounds include a combination of scheduled and unscheduled slots, in an extension of the concepts described above regarding FIGS. 7A and 7B. In hybrid-based ranging, a round may comprise at least one CAP and at least one contention-free period (CFP) to accommodate both known controlees (e.g., responding UWB devices) and unknown controlees.

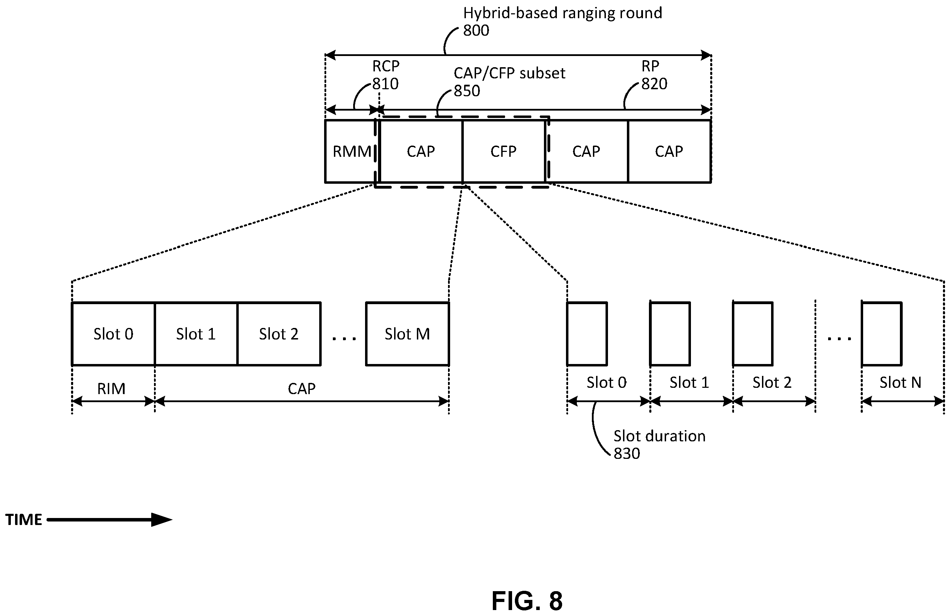

**FIG. 8** is a timing diagram of a hybrid-based ranging round 800, provided to illustrate how embodiments may implement a process for moving a UWB responder device, or tag, from a CAP to a CFP. As previously noted, a hybrid-based ranging round 800 includes one or more CAP and CFP portions. Specifically, the hybrid-based ranging round 800 may comprise a ranging control phase (RCP) 810 (in which a ranging management message (RMM) may be transmitted by the initiator), followed by a ranging phase (RP) 820 comprising one or more CAPs and one or more CFPs. (The RP 820 in FIG. 8 has two CAPs and two CFPs, but numbers may vary. The RMM may indicate start/end of each of the CAPs and CFPs. A pair of CAP/CFPs may be referred to as a CAP/CFP subset 850. A hybrid-based ranging round 800 may have one or more CAP/CFP subsets 850.) According to embodiments, the CAP may be used for unknown responders that will potentially send response messages (e.g., as described above with respect to FIGS. 7A/7B), while the CFP (comprising a series of slots having slot duration 830 in which transmissions may be made) may be used for scheduled transmissions comprising synchronization between anchors for DL-TDoA and/or UL transmissions by known tags for UL-TDOA. Control messages in the first slots (Slot 0) of each of the CAP and CFP portions can indicate the scheduling of the slots within each of the respective portions. According to some embodiments, a controller may still maintain an RML and reserve a portion of the CAP for devices on the RML. It may therefore be up to the controller to determine whether to move devices from a reserved portion of the CAP to the CFP.

In some embodiments, UWB controllers and/or UWB controlees may be communicatively coupled with one or more servers. In such embodiments, the one or more servers may be referred to as a Connected Intelligent Edge (CIE) or, more generically, a "UWB management server," and may be used to manage UWB devices and coordinate UWB positioning sessions. According to some embodiments, the CIE may be privately managed, and/or may comprise a cloud-based service accessible to UWB devices. According to some embodiments, the functionality of the CIE may be executed by a single physical computer (e.g., a computer server). In some implementations, the functionality provided by the CIE may be provided on a subscription-based basis.

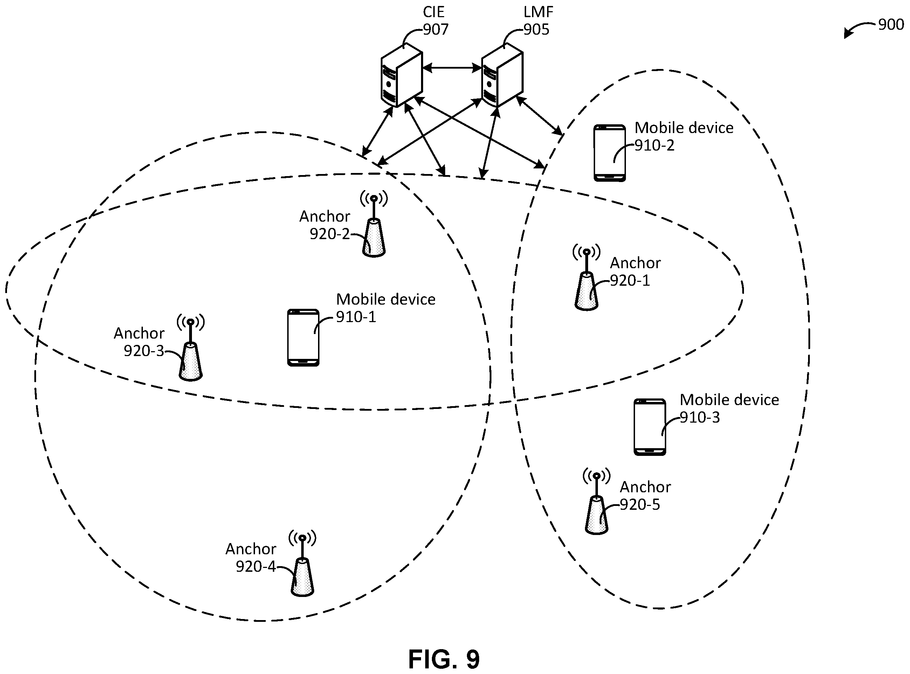

**FIG. 9** is a diagram of an example cloud-based infrastructure 900 to provide hybrid NR/UWB positioning, according to an embodiment. As with other figures herein, arrows between devices/device groups indicate communication links, which may include one or more intervening devices (not shown). In this example, cloud-based servers include an LMF 905 (e.g., as previously described) and CIE 907, which may be used to coordinate positioning sessions. As previously noted, the LMF 905 may coordinate positioning functionality in a 5G NR network. The CIE 907 may perform similar coordinating functions for UMB devices. According to some embodiments, the CIE 907 and/or LMF 905 may be privately managed and/or may be a cloud-based service accessible to NR/UWB devices, such as mobile devices 910-1, 910-2, and 910-3 (collectively and generically referred to as mobile devices 910) and/or UWB anchors 920-1, 920-2, 920-3, 920-4, and 920-5 (collectively and generically referred to as anchors 920). Mobile devices 910 may comprise UEs communicatively coupled with a cellular (e.g., 5G) network to which the LMF 905 provides positioning services. According to some embodiments, the functionality of the CIE 907 and LMF 905 may be executed by a single physical computer (e.g., a computer server) or a plurality of physical computers. In some implementations, the functionality provided by the CIE 907 and/or LMF 905 may be provided on a subscription-based basis. In this example, the CIE 907 and the anchors 920 could be, for instance, part of a standalone UWB infrastructure in a mall, factory, warehouse, etc. In this example, the CIE 907 may be in communication with anchors 920 and capable of receiving information such as the anchors' RMLs). In some instances, the CIE 970 may not be in communication with mobile devices 910.

To provide hybrid NR/UWB ranging, the CIE 907 and the LMF 905 may be communicatively coupled and may exchange relevant information through the backend (e.g., over the IP and above layers). Because the CIE 907 has knowledge of the RMLs of the various anchors 920 (e.g., from the anchors 920 reporting RMLs to the CIE 907), the CIE 907 may provide the LMF 905 with information pertaining to these RMLs. The LMF 905 can then instruct any combination of the mobile devices 910 to perform ranging on (e.g., only on) a selected subset of the UWB positioning sessions with the various anchors 920. Essentially, the LMF 905 can configure a mapping between different groups of mobile devices 910 and UWB positioning sessions. According to some embodiments, the mobile devices 910 can be assigned CFP slots in the sessions, so that unknown UWB devices (e.g., with no NR capability) can contend over the slots in the CAP.

There can be configurations, for example, in which a CIE may not disclose certain information to an LMF. This may include, for instance, information regarding a proprietary UWB-based infrastructure that a managing entity of the infrastructure may not want to disclose to the 5G network of the LMF. In such configurations, the CIE can request information from the LMF for 5G wireless entities that can be used as anchors (e.g., base stations and/or UEs), which may be unknown to the CIE. Upon receiving this information from the LMF, the CIE can then update the RMLs of UWB anchors and perform grouping of devices. The information requested by the CIE can include UWB capability information. For example, referring again to FIG. 9, the mobile devices 910 can report to the LMF 905 after receiving one or more UWB configuration messages respectively broadcast by one or more of the anchors 920. The LMF 905 can then send this information to the CIE 907. Additionally or alternatively, the LMF 905 may maintain a coarse position estimate of each mobile device 910, preemptively infer that a mobile device 910 is in the vicinity of a facility with a known UWB-equipped infrastructure, and alert the CIE 907 of the corresponding UWB-equipped infrastructure accordingly.

Different embodiments may implement different architectural options to enable hybrid NR/UWB ranging. In particular, four options are contemplated (although other options may be used).

The first option (herein, the "First Option") comprises a device-based NR/UWB hybrid positioning architecture in which an NR/UWB device (e.g., a mobile device of FIG. 9) supports jointly optimizing the configuration, reporting, and measurements across both NR and UWB technologies. In this architecture, the LMF may only be involved in the NR positioning configuration. The NR/UWB device communicates with both the LMF and the UWB anchors. Because the First Option does not use a server, it may be considered as using a device-centric architecture rather than cloud-based architecture.

The second option (herein, the "Second Option") comprises a server-based NR/UWB hybrid positioning architecture in which a location server is involved in both NR and UWB configuration. The server, which may comprise the LMF of a 5G network, may communicate with both of the NR/UWB device and UWB anchors. The NR/UWB device may also communicate with the UWB anchors.

The third option (herein, the "Third Option") comprises a cloud-based hybrid NR/UWB positioning architecture that is device initiated. In this option, the UWB CIE may configure the UWB sessions (e.g., between the NR/UWB device and UWB anchors), and the NR/UWB device may interact with both the LMF and the CIE. In the Third Option, the NR/UWB device may communicate with the LMF, the UWB CIE, and the UWB anchors.

The fourth option (herein, the "Fourth Option") comprises a cloud-based hybrid NR/UWB positioning architecture that is network initiated. In the Fourth Option, the UWB CIE may configure the UWB sessions, and the LMF may interact with the devices and the CIE. That is, the LMF can communicate with the NR/UWB device and UWB CIE. The NR/UWB device may further communicate with the UWB CIE and with UWB anchors.

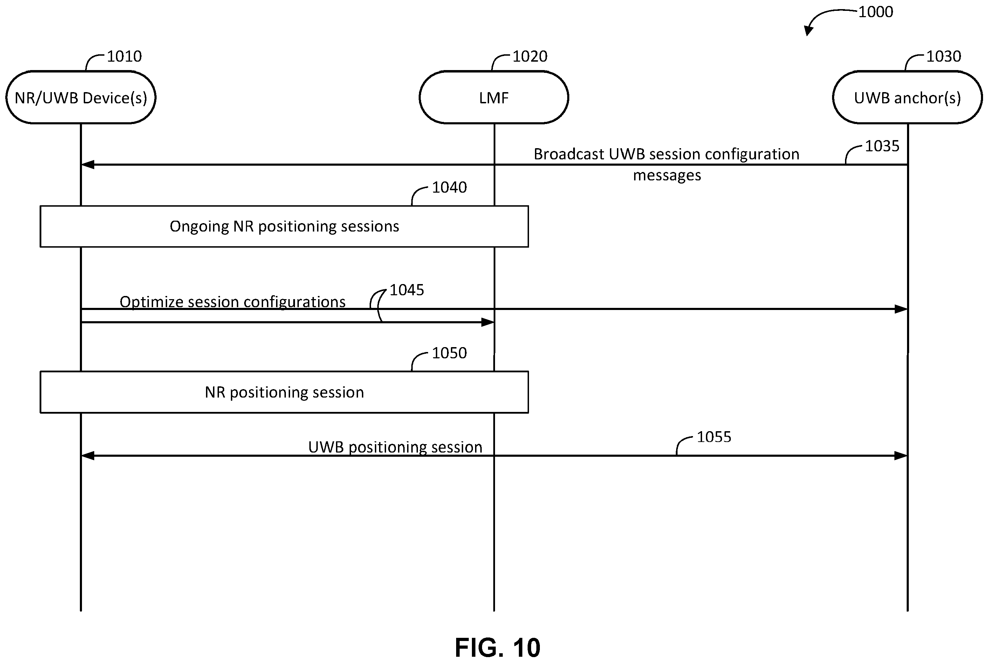

**FIG. 10** is a message flow diagram 1000 illustrating an example process for device-based hybrid NR/UWB positioning, according to an embodiment. The message flow diagram 1000 may correspond with the First Option discussed above. The process may begin with the functionality shown by arrow 1035, in which one or more NR/UWB devices (e.g., a mobile device 910 of FIG. 9) receive one or more UWB configuration messages broadcast by one or more UWB anchors (e.g., anchors 920 of FIG. 9). It can be noted that, in alternative embodiments, the one or more messages may be unicast or group cast to the NR/UWB devices 1010, depending on desired functionality. Additionally, as shown by block 1040, the NR/UWB device(s) 1010 may conduct ongoing NR positioning sessions, which may be coordinated by an LMF 1020, and may involve receiving and/or sending RF signals to wireless nodes of the 5G NR network, such as base stations and/or UEs. According to some embodiments, as shown by arrows 1045, the NR/UWB device(s) 1010 may optimize session configurations, communicating with the LMF 1020 and/or UWB anchor(s) 1030 to set up positioning sessions such that the NR/UWB device can participate in positioning sessions in both technologies in an optimal way (e.g., without RF collations or other interference, without interfering with other communications, etc.). Optimization may involve, for example, frequency and/or time multiplexing of NR and UWB positioning sessions. At block 1050 and arrow 1055, the NR and UWB positioning sessions are then conducted.

Performing positioning using the First Option in this manner may provide for security, accuracy, and/or power in various ways. For example, if the NR/UWB device(s) 1010 detects spoofing over NR, it may request UWB positioning set up with enhanced security features. Additionally or alternatively, the NR/UWB device(s) 1010 may request for UWB positioning set up to achieve better accuracy. The NR/UWB device(s) 1010 may optionally request low-power UWB positioning, which can be enabled via preconfigured session setup, reserved slot allocation, block striding, or a combination thereof.

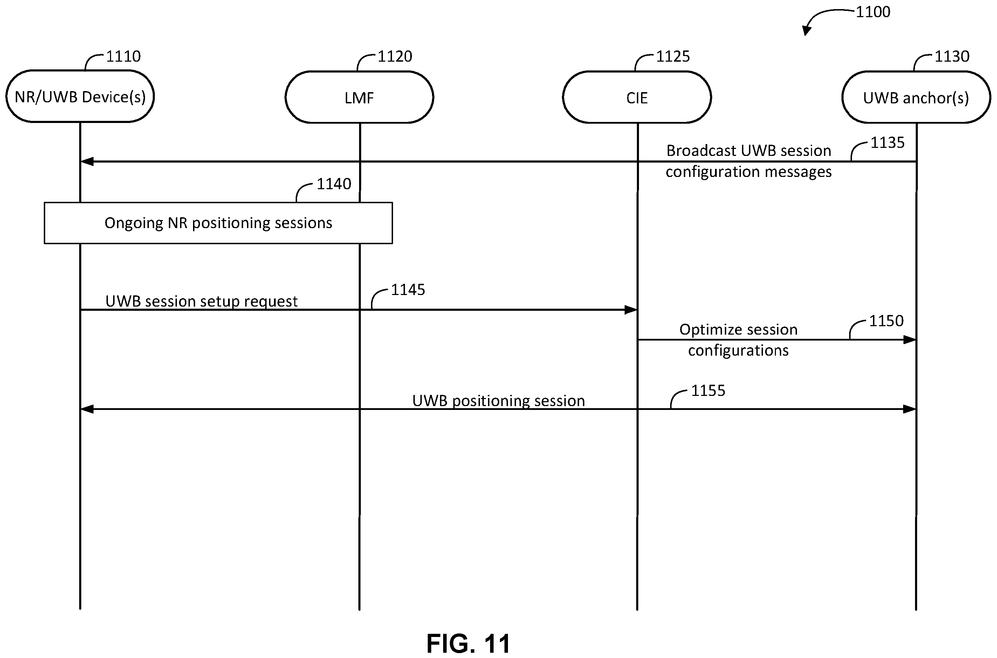

**FIG. 11** is a message flow diagram 1100 illustrating an example of a process for device-initiated, cloud-based hybrid NR/UWB positioning, according to an embodiment. This example may correspond with the Third Option described above. Here, similar to the call flow of FIG. 10, the process may begin with the functionality shown by arrow 1135, in which one or more NR/UWB devices 1110 may receive one or more UWB configuration messages broadcast (or unicast, group cast, etc.) by one or more UWB anchors 1130. The NR/UWB device(s) 1110 also may conduct ongoing NR positioning sessions with an LMF 1120, as indicated at block 1140. Additionally, as shown by arrow 1145, the NR/UWB device(s) 1110 can send a UWB session setup request to the CIE 1125 to coordinate UWB positioning. As such, the NR/UWB device(s) 1110 may provide information regarding its capabilities (e.g., UWB capability information such as frequency/channel capabilities, channel stitching capabilities, timing capabilities (e.g., regarding retuning between channels), or the like). In some embodiments, capability information may also include the type of positioning measurements that the NR/UWB device(s) 1110 is capable of performing. This can include, for example, whether the device can support RTT, AoA, or TDoA measurements, or a combination thereof. The CIE 1125 can then use the information provided by the NR/UWB device(s) 1110, along with information regarding UWB anchor(s) 1130 (e.g., positioning sessions with other UWB devices, RML information, UWB anchor capability information, etc.) and/or other NR/UWB devices (e.g., other NR/UWB devices in communication with the CIE 1125, which may want to join UWB positioning sessions with the UWB anchor(s) 1130) to optimize session configurations (e.g., across a plurality of UWB anchors 1130 and/or NR/UWB devices 1110) and configure UWB anchor(s) 1130 accordingly, as indicated by arrow 1150. By optimizing sessions for multiple NR/UWB devices 1110, the CIE 1125 can, for example, help minimize RF collisions by helping ensure the various NR/UWB devices 1110 use different slots and/or different rounds in the various UWB sessions (i.e., the CIE 1125 can configure UWB anchor(s) 1130 to assign each NR/UWB device 1110 with a dedicated slot to help minimize RF collisions). The UWB anchor(s) 1130 can then conduct positioning sessions with the NR/UWB device(s) 1110, as indicated by arrow 1155. This and other methods that utilize the Third Option described above can provide enhancements and security, accuracy, and/or power metrics. For example, an NR/UWB device may not need to transmit anchor-specific configuration messages separately over Bluetooth or another out-of-band technology.

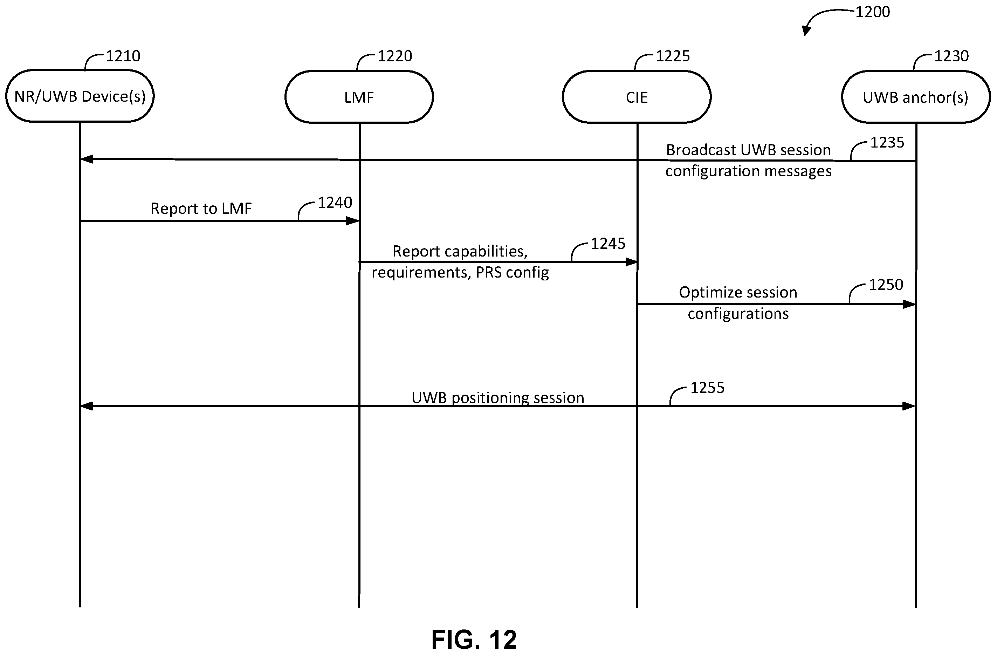

**FIG. 12** is a message flow diagram 1200 illustrating an example of a process in which one or more NR/UWB devices 1210 can request a server to set up a UWB positioning session, according to an embodiment. Similar to the example of FIG. 11, this example may correspond with the Third Option described above. The process may begin similarly as well, where the NR/UWB device(s) 1210 receive a broadcast of UWB session configuration message from one or more UWB anchors 1230, as indicated by arrow 1235. In contrast to the process in FIG. 11, however, rather than sending a request to the CIE 1225, the NR/UWB device(s) 1210 may communicate with the LMF 1220 to coordinate UWB positioning, as indicated by arrow 1240. The report at arrow 1240 may include information regarding the UWB anchor(s) 1230, session information, or the like, to enable the LMF 1220 to coordinate the UWB session setup This communication may be performed, for example, over an existing NR packet (e.g., in relation to NR positioning). According to some embodiments, this may include an on-demand positioning reference signal (PRS) request. The LMF 1220 can, in turn, report the capabilities and/or requirements of the NR/UWB device(s) 1210, NR positioning configuration information (e.g., PRS configuration information), or a combination thereof, to the CIE 1225, as indicated by arrow 1245. With this information, the CIE 1225 can then optimize session configurations and configure UWB anchor(s) 1230 accordingly, as indicated by arrow 1250. Again, by optimizing sessions for multiple NR/UWB devices 1210, the UWB CIE can help minimize RF collisions by helping ensure the various NR/UWB devices 1210 use different slots and/or different rounds in the various UWB sessions and/or perform UWB sessions in a way that does not conflict with NR positioning (e.g., based on the positioning configuration received by the CIE 1225 from the LMF 1220). The UWB anchor(s) 1230 can then conduct positioning sessions with the NR/UWB device(s) 1210, as indicated by arrow 1255.

This and similar techniques for coordinating UWB positioning sessions have various advantages. For example, the NR/UWB device(s) 1210 do not need to separately transmit anchor-specific messages over Bluetooth or other OOB technologies. Instead, session information is coordinated via the LMF 1220 and CIE 1225, where the LMF 1220 performs controlee setup with the CIE 1225 on behalf of the NR/UWB device(s) 1210. Further, the LMF 1220 and CIE 1225 may have the opportunity to jointly optimize configurations for the devices. This includes CAP/CFP configuration, time alignment, channel number, and the like. According to some embodiments, optimization may involve allocating one or more slots in a CFP to the NR/UWB device(s) 1210, which can avoid a less efficient contention-based approach. This can save time and power resources. Additionally or alternatively, according to some embodiments, the NR/UWB device(s) 1210 May apply session selection strategies for additional optimization at the NR/UWB device(s) 1210.

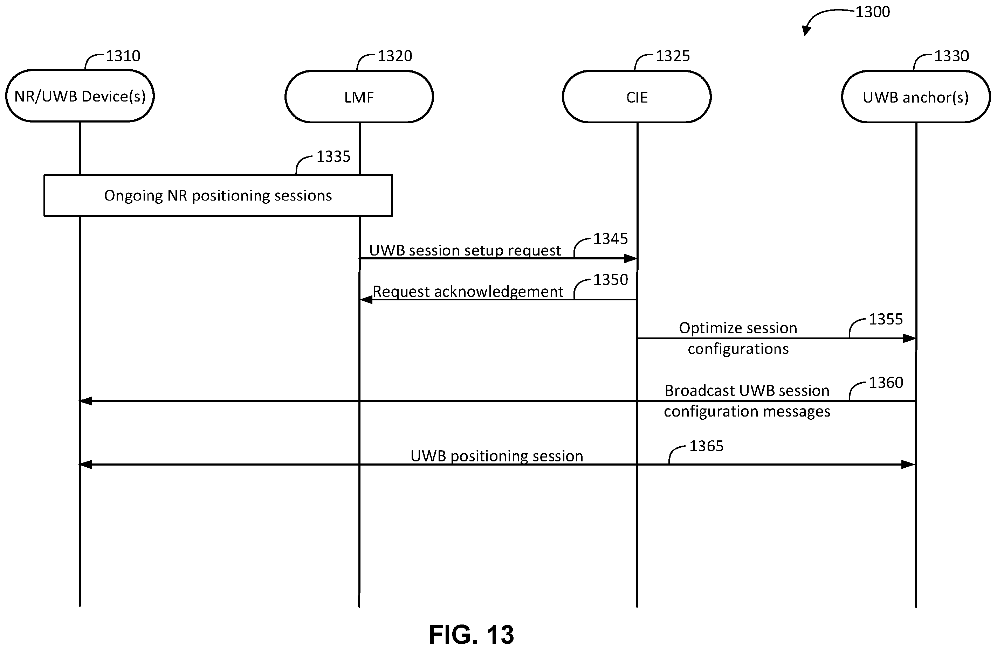

**FIG. 13** is a message flow diagram 1300 illustrating an example process for network-initiated, cloud-based hybrid NR/UWB positioning, according to an embodiment. This example may correspond with the Fourth Option described above. In this example, while conducting ongoing NR positioning sessions with one or more NR/UWB devices 1310, shown by block 1335, the LMF 1320 may provide the signaling between the NR/UWB device(s) 1310 and CIE 1325 to initiate UWB sessions (e.g., that are conducted in parallel with the ongoing NR positioning sessions at block 1335). More specifically, as shown by arrow 1345, the LMF 1320 may provide the CIE 1325 with a UWB session setup request in which the LMF 1320 may provide information regarding the NR/UWB device(s) 1310 (e.g., device capabilities, device requirements, etc.), along with NR positioning configuration (e.g., PRS configuration) information, to the CIE 1325. This information may be obtained by the LMF 1320 during an NR positioning session and/or via other communications. As shown by arrow 1350, the CIE 1325 may acknowledge the request by the LMF 1320. The CIE 1325 can then optimize the session configurations of one or more UWB anchors 1330, as shown by arrow 1355, to initiate the UWB sessions with the NR/UWB device(s) 1310. Similar to previous methods described above, this cloud-based configuration of UWB anchor(s) 1330 can take the place of an OOB communication between the NR/UWB device(s) 1310 and UWB anchor(s) 1330 prior to the UWB positioning sessions. As shown by arrow 1360, the UWB anchor(s) 1330 can then broadcast UWB session configuration messages with configurations based on the settings provided by CIE 1325. The resulting UWB sessions are conducted, as shown by arrow 1365.

Triggers for an LMF to initiate UWB sessions in the manner shown in FIG. 13 may be similar to triggers in other hybrid NR/UWB positioning methods described herein, including a desire for increased security, accuracy, power, or a combination thereof. For example, the LMF may detect spoofing, and therefore request UWB positioning with enhanced security features. With respect to accuracy, the LMF may receive a request for a more accurate position estimate from an NR/UWB device or another source, and the LMF may request UWB positioning with the desired accuracy. With respect to power, the LMF and CIE can jointly optimize parameters such as STS parameters, session selection, clock drift, ranging method, or any combination thereof, which can help provide power savings.

Positioning requirements regarding latency and/or precision may be triggers for the LMF to initiate UWB sessions, in addition to or as an alternative to other triggers described herein. That is, hybrid NR/UWB positioning using any of the options described herein may be triggered upon receipt of a latency requirement that may not be able to be met using NR positioning (or UWB positioning) alone. Similarly, hybrid NR/UWB positioning may be triggered upon receipt of an accuracy requirement (e.g., defining an accuracy of how granular or fine measurements are) that may not be able to be met using NR positioning (or UWB positioning) alone.

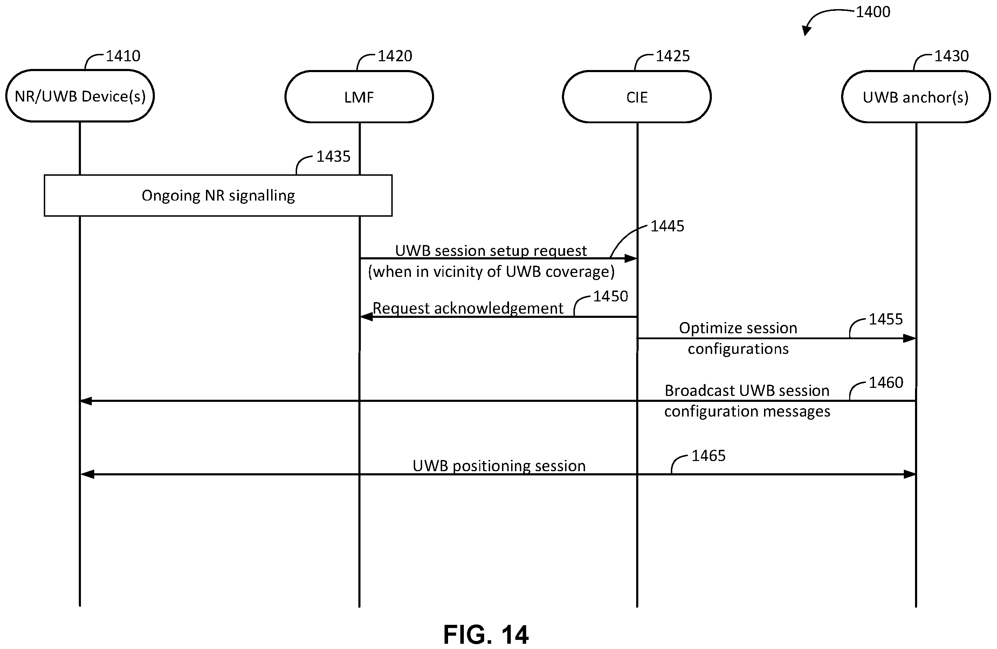

**FIG. 14** is a message flow diagram 1400 illustrating an example of how a server can set up a UWB positioning session, according to an embodiment. This method may be seen as a variation to the method shown in FIG. 13, and the operations 1435-1465 may be performed in a manner similar to corresponding operations 1335-1365 described above. Here, however, a trigger for the LMF 1420 to communicate device information regarding the one or more NR/UWB devices 1410 to the CIE 1425 may comprise the LMF 1420 detecting that the NR/UWB device(s) 1410 is within a coverage area (and/or within a threshold distance to a coverage area) of one or more UWB anchors 1430 served by a UWB infrastructure managed by the CIE 1425. The detection of the position of the NR/UWB device(s) 1410 with respect to the coverage area may be based on NR-based positioning performed by the LMF 1420.

This and similar techniques for coordinating UWB positioning sessions have various advantages. In addition to the advantages described with respect to FIG. 13, the advantages of the method shown in FIG. 14 may include enabling session setup by an LMF even before NR/UWB devices are in a coverage area of the UWB anchors. This can result in lower latency from a preconfigured and optimized session setup. Further, the LMF can initiate a controlee setup with the CIE on behalf of the UE NR/UWB devices. This can be used, for example, in various applications such as a car entering a house, a truck with packages entering a warehouse, indoor/outdoor robots that require high accuracy, or the like.

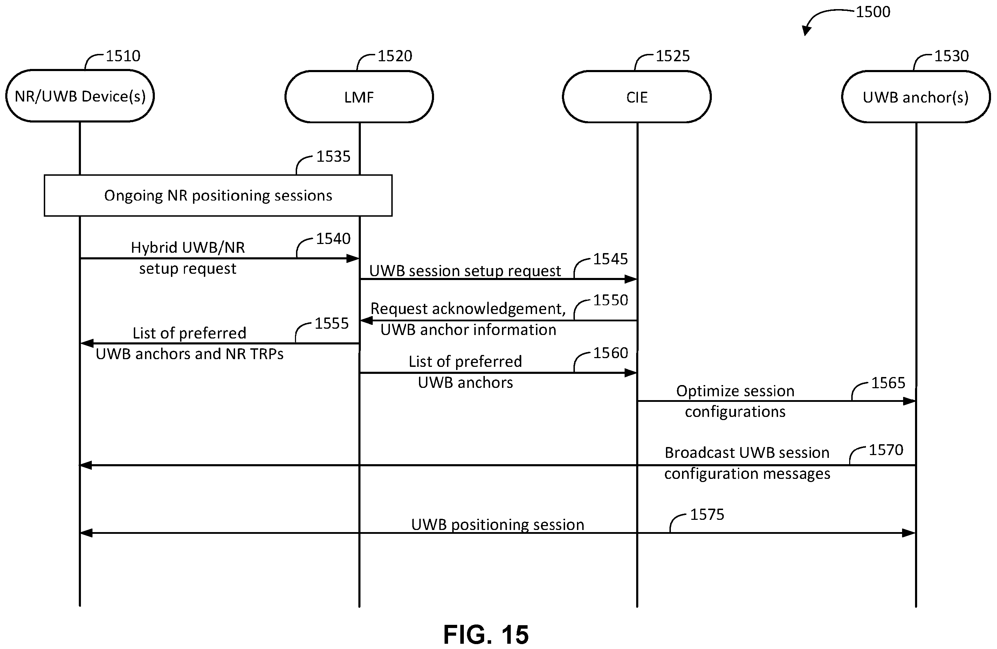

**FIG. 15** is a message flow diagram 1500 illustrating an example of how a server can determine a list of preferred anchor devices for hybrid NR/UWB positioning, according to an embodiment. This example may correspond with the Third Option and/or the Fourth Option described above. (That is, either or both LMF 1520 or CIE 1525 could determine a list of preferred anchors.) In this example, along with ongoing NR positioning sessions (as shown by block 1535) the one or more NR/UWB devices 1510 may request a hybrid NR/UWB positioning setup from the LMF 1520, as indicated by arrow 1540. In turn, the LMF 1520 may send a request are a UWB session set up to the CIE 1525, as shown by arrow 1545. Similar to requests from LMF to CIE in previously-described embodiments, this request may contain the capabilities, requirements, and positioning configuration of the NR/UWB device(s) 1510. Here, however, the CIE 1525 may not only provide the LMF 1520 with a request acknowledgment but also provide the LMF 1520 with anchor information with which the LMF 1520 can determine a list of preferred UWB anchors (e.g., based on a coarse position estimate of the NR/UWB device(s) 1510), as indicated by arrow 1550. This list may be provided to the NR/UWB device(s) 1510 (e.g., along with a list of preferred base stations/TRPs for NR positioning), as indicated by arrow 1555. Additionally, the LMF 1520 can send a list of preferred UWB anchors to the CIE 1525, as indicated by arrow 1560. Using this information, the CIE 1525 can then optimize session configurations, as shown by arrow 1565. According to some embodiments, this optimization may include disabling UWB anchors that are not on the preferred list. The UWB anchor(s) 1530 can broadcast the UWB session configuration messages, as indicated at arrow 1570, and the NR/UWB device(s) 1510 and UWB anchor(s) 1530 can then conduct UWB sessions accordingly, as indicated at arrow 1575.

Depending on desired functionality, the illustrated method may include one or more additional aspects and/or advantages. For example, because the LMF selects both TRPs and the UWB anchors, it can help ensure good dilution of precision (DOP) across both NR and UWB technologies (because the LMF has a coarse position estimate of the NR/UWB device(s)). The NR/UWB device(s) can exchange measurements with some TRPs and UWB anchors. In some embodiments, for non-preferred UWB anchors, their active period of operation can be reduced (e.g., by the CIE) by increasing their blocks striding length power saving.

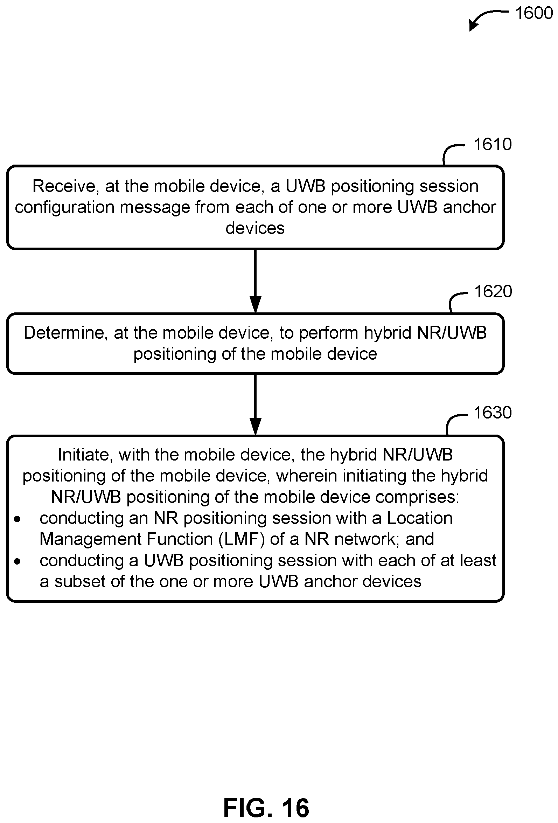

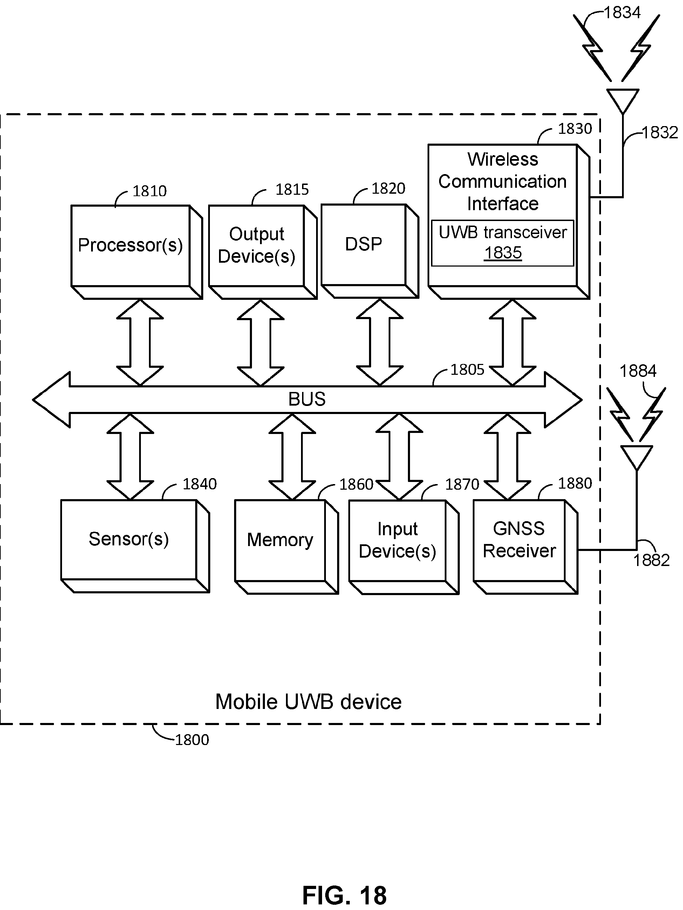

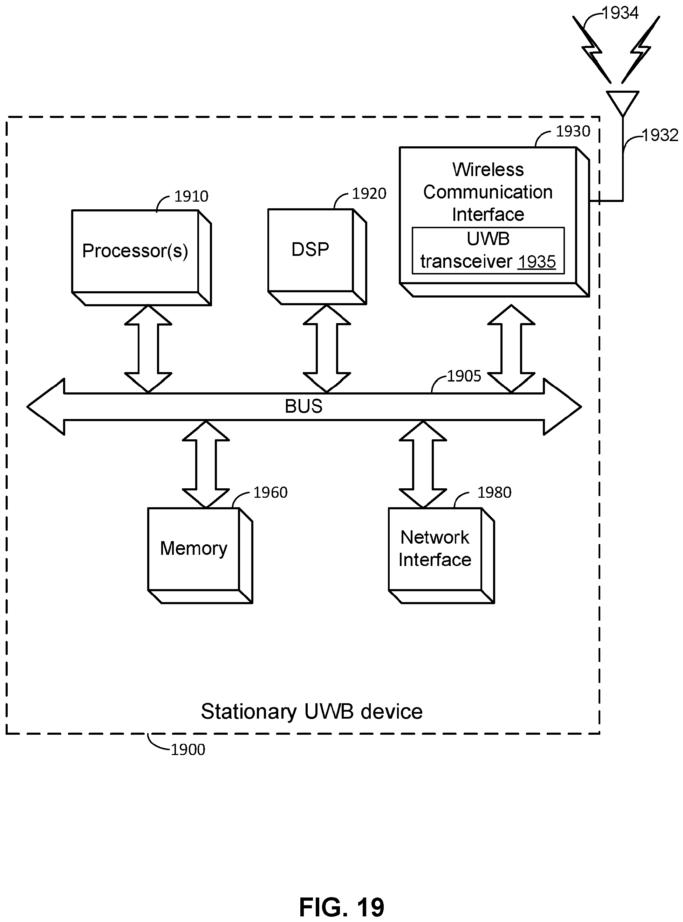

**FIG. 16** is a flow diagram of a method 1600 of coordinating NR/UWB positioning sessions for a mobile device, according to an embodiment. Aspects of the method 1600 may reflect the functionality of an NR/UWB device as described in the embodiments above. Means for performing the functionality illustrated in one or more of the blocks shown in FIG. 16 may be performed by hardware and/or software components of a UWB device. Example components of a mobile or stationary UWB device are respectively illustrated in FIGS. 18 and 19, which are described in more detail below.

At block 1610, the functionality comprises receiving, at the mobile device, a UWB positioning session configuration message from each of one or more UWB anchor devices. As described herein, a configuration message may be broadcast, unicast, or group cast from each of the one or more UWB anchor devices.

Means for performing functionality at block 1610 may comprise one or more processors 1810, a digital signal processor (DSP) 1820, a wireless communication interface 1830 (which may include a UWB transceiver 1835), a memory 1860, and/or other components of a mobile UWB device, as illustrated in FIG. 18. Additionally or alternatively, means for performing functionality at block 1610 may comprise one or more processors 1910, a DSP 1920, a wireless communication interface 1930 (which may include a UWB transceiver 1935), a memory 1960, and/or other components of a stationary UWB device, as illustrated in FIG. 19.

At block 1620, the functionality comprises determining, at the mobile device, to perform hybrid NR/UWB positioning of the mobile device. As noted herein, determining to perform the hybrid NR/UWB positioning of the mobile device may be based at least in part on the mobile device determining spoofing is occurring over an NR connection of the mobile device, a position accuracy requirement related to the positioning of the mobile device comprises an accuracy above a threshold value, a power requirement related to the positioning of the mobile device is below a threshold value, the positioning of the mobile device includes a precision requirement, or the positioning of the mobile device includes a latency requirement, or a combination thereof.

Means for performing functionality at block 1620 may comprise one or more processors 1810, a digital signal processor (DSP) 1820, a wireless communication interface 1830 (which may include a UWB transceiver 1835), a memory 1860, and/or other components of a mobile UWB device, as illustrated in FIG. 18. Additionally or alternatively, means for performing functionality at block 1620 may comprise one or more processors 1910, a DSP 1920, a wireless communication interface 1930 (which may include a UWB transceiver 1935), a memory 1960, and/or other components of a stationary UWB device, as illustrated in FIG. 19.

At block 1630, the functionality comprises initiating, with the mobile device, the hybrid NR/UWB positioning of the mobile device, wherein initiating the hybrid NR/UWB positioning of the mobile device comprises: conducting an NR positioning session with an LMF of an NR network; and conducting a UWB positioning session with each of at least a subset of the one or more UWB anchor devices. As noted elsewhere herein, initiating the hybrid NR/UWB positioning of the mobile device may comprise sending a server UWB session setup information, from the mobile device, to initiate the UWB positioning session with each of the at least the subset of the one or more UWB anchor devices. In such embodiments, the server may comprise the LMF. In some embodiments, the method may further comprise requesting, by the mobile device, an on-demand PRS for the NR positioning session. Additionally or alternatively, the server may comprise a CIE configured to provide each of the at least the subset of the one or more UWB anchor devices with UWB positioning session configurations. According to some embodiments, initiating the hybrid NR/UWB positioning of the mobile device comprises sending the LMF a request for setup information for the hybrid NR/UWB positioning of the mobile device, and receiving, from the LMF, a list of preferred devices with which to conduct the NR positioning session and the UWB positioning session, wherein each UWB anchor device of the at least the subset of the one or more UWB anchor devices may be included on the list of preferred devices.

Means for performing functionality at block 1630 may comprise one or more processors 1810, a digital signal processor (DSP) 1820, a wireless communication interface 1830 (which may include a UWB transceiver 1835), a memory 1860, and/or other components of a mobile UWB device, as illustrated in FIG. 18. Additionally or alternatively, means for performing functionality at block 1630 may comprise one or more processors 1910, a DSP 1920, a wireless communication interface 1930 (which may include a UWB transceiver 1935), a memory 1960, and/or other components of a stationary UWB device, as illustrated in FIG. 19.

Embodiments may include one or more additional features, depending on desired functionality. For example, according to some embodiments conducting the NR positioning session may comprise sending one or more parameters for the NR positioning session to the LMF, wherein the one or more parameters may be based, at least in part, on the UWB positioning session with each of at least the subset of the one or more UWB anchor devices. The one or more parameters may comprise a timing of transmission of one or more NR positioning signals used in the NR positioning session, a frequency of transmission of the one or more NR positioning signals in the NR positioning session, or both. Additionally or alternatively, conducting the UWB positioning session with each of at least the subset of the one or more UWB anchor devices comprises sending one or more parameters to each of at least the subset of the one or more UWB anchor devices, and wherein the one or more parameters are based, at least in part, on the NR positioning session. According to some embodiments, one or more parameters may comprise a timing of transmission of one or more UWB positioning signals, a frequency of transmission of the one or more UWB positioning signals, or both.

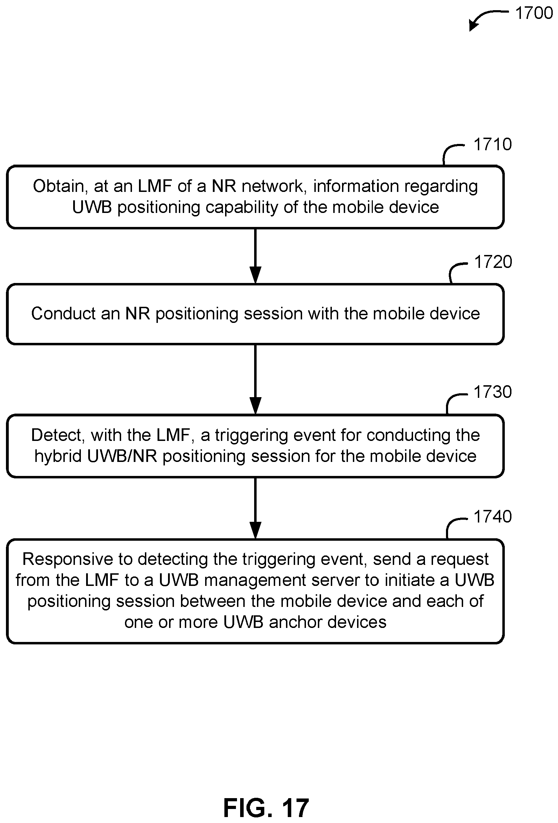

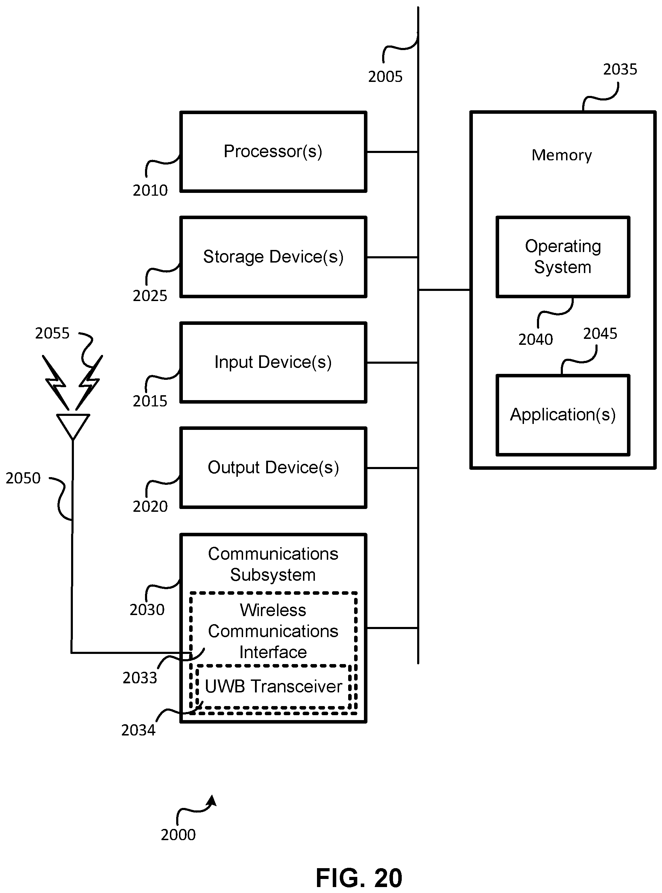

**FIG. 17** is a flow diagram of a method 1700 of coordinating NR/UWB positioning sessions for a mobile device, according to an embodiment. Aspects of the method 1700 may reflect the functionality of an LMF as described in the embodiments above. Means for performing the functionality illustrated in one or more of the blocks shown in FIG. 17 may be performed by hardware and/or software components of a server. Example components of a computer system that may operate as a server are illustrated in FIG. 20, which are described in more detail below.

At block 1710, the functionality comprises obtaining, at an LMF of an NR network, information regarding UWB positioning capability of the mobile device. As noted in the embodiments described herein, the UWB positioning capability of a mobile device may be obtained at an LMF from the mobile device via communications (e.g., NR communications) from the mobile device. The UWB positioning capability may include positioning-related features such as UWB channels available to the mobile device, frequency stitching capabilities, and the like.

Means for performing functionality at block 1710 may comprise one or more processors 2010, one or more storage devices 2025, a communications subsystem 2030 (which may include a wireless communications interface 2033), a memory 2035 (which may include an operating system 2040 and/or one or more applications 2045), and/or other components of a computing device, as illustrated in FIG. 20.

At block 1720, the functionality comprises conducting an NR positioning session with the mobile device. The NR positioning session may be conducted in accordance with relevant NR standards and may include, for example, an LPP positioning session.

Means for performing functionality at block 1720 may comprise one or more processors 2010, one or more storage devices 2025, a communications subsystem 2030 (which may include a wireless communications interface 2033), a memory 2035 (which may include an operating system 2040 and/or one or more applications 2045), and/or other components of a computing device, as illustrated in FIG. 20.

At block 1730, the functionality comprises detecting, with the LMF, a triggering event for conducting the hybrid NR/UWB positioning session for the mobile device. Receiving a request from the mobile device itself. Receiving at the LMF, a request from the mobile device for UWB positioning. In such embodiments, the request from the mobile device may further comprise a request for on-demand PRS. Additionally or alternatively, conducting the NR positioning session with the mobile device may be responsive to the request for the on-demand PRS. According to some embodiments, detecting the triggering event may comprise determining, with the LMF: spoofing is occurring over an NR connection of the mobile device, position accuracy requirement related to the positioning of the mobile device comprises an accuracy above a threshold value, a power requirement related to the positioning of the mobile device is below a threshold value a precision requirement, a latency requirement, or a combination thereof. According to some embodiments, detecting the triggering event may comprise determining, with the LMF, a location of the mobile device is in, or within a threshold distance of, a coverage area served by a UWB infrastructure managed by the UWB management server.

Means for performing functionality at block 1730 may comprise one or more processors 2010, one or more storage devices 2025, a communications subsystem 2030 (which may include a wireless communications interface 2033), a memory 2035 (which may include an operating system 2040 and/or one or more applications 2045), and/or other components of a computing device, as illustrated in FIG. 20.

At block 1740, the functionality comprises, responsive to detecting the triggering event, sending a request from the LMF to a UWB management server to initiate a UWB positioning session between the mobile device and each of one or more UWB anchor devices. As noted herein, according to some embodiments, the UWB management server may comprise a CIE.

Means for performing functionality at block 1740 may comprise one or more processors 2010, one or more storage devices 2025, a communications subsystem 2030 (which may include a wireless communications interface 2033), a memory 2035 (which may include an operating system 2040 and/or one or more applications 2045), and/or other components of a computing device, as illustrated in FIG. 20.

As noted elsewhere herein, some embodiments may include one or more additional features. For example, some embodiments may further comprise receiving, at the LMF from the UWB management server, a list of one or more preferred UWB devices, determining, with the LMF, one or more preferred NR devices with which the mobile device is to conduct the NR positioning session; and sending, from the LMF to the mobile device, a list of preferred devices comprising the one or more preferred UWB devices and the one or more preferred NR devices. In such embodiments, the list of one or more preferred UWB devices may include the one or more UWB anchor devices. Some embodiments may further comprise sending a positioning reference signal (PRS) configuration for the mobile device from the LMF to the UWB management server.

**FIG. 18** is a block diagram of an embodiment of a mobile UWB device 1800, which can be utilized as described herein above. It should be noted that FIG. 18 is meant only to provide a generalized illustration of various components, any or all of which may be utilized as appropriate. For example, more basic/simple types of UWB devices may omit various components that may be included in more advanced/complex UWB devices. Furthermore, as previously noted, the functionality of the UE discussed in the previously described embodiments may be executed by one or more of the hardware and/or software components illustrated in FIG. 18.

The mobile UWB device 1800 is shown comprising hardware elements that can be electrically coupled via a bus 1805 (or may otherwise be in communication, as appropriate). The hardware elements may include a processor(s) 1810 which can include without limitation one or more general-purpose processors (e.g., an application processor), one or more special-purpose processors (such as digital signal processor (DSP) chips, graphics acceleration processors, application specific integrated circuits (ASICs), and/or the like), and/or other processing structures or means. Processor(s) 1810 may comprise one or more processing units, which may be housed in a single integrated circuit (IC) or multiple ICs. As shown in FIG. 18, some embodiments may have a separate DSP 1820, depending on desired functionality. Location determination and/or other determinations based on wireless communication may be provided in the processor(s) 1810 and/or wireless communication interface 1830 (discussed below). The mobile UWB device 1800 also can include one or more input devices 1870, which can include without limitation one or more keyboards, touch screens, touch pads, microphones, buttons, dials, switches, and/or the like; and one or more output devices 1815, which can include without limitation one or more displays (e.g., touch screens), light emitting diodes (LEDs), speakers, and/or the like.

The mobile UWB device 1800 may also include a wireless communication interface 1830, which may comprise without limitation a modem, a network card, an infrared communication device, a wireless communication device, and/or a chipset (such as a Bluetooth^{®} device, an IEEE 802.11 device, an IEEE 802.15.4 device, a Wi-Fi device, a WiMAX device, a WAN device, and/or various cellular devices, etc.), and/or the like, which may enable the mobile UWB device 1800 to communicate with other devices as described in the embodiments above. The wireless communication interface 1830 may permit data and signaling to be communicated (e.g., transmitted and received) with access points, various base stations and/or other access node types, and/or other network components, computer systems, and/or any other electronic devices communicatively coupled therewith. The communication can be carried out via one or more wireless communication antenna(s) 1832 that send and/or receive wireless signals 1834. According to some embodiments, the wireless communication antenna(s) 1832 may comprise a plurality of discrete antennas, antenna arrays, or any combination thereof. The antenna(s) 1832 may be capable of transmitting and receiving wireless signals using beams (e.g., Tx beams and Rx beams). Beam formation may be performed using digital and/or analog beam formation techniques, with respective digital and/or analog circuitry. The wireless communication interface 1830 may include such circuitry.

As illustrated, the wireless indication interface 1830 may further comprise a UWB transceiver 1835. The UWB transceiver 1835 may be operated to perform the UWB operations described herein. Further, the wireless communications interface 1830 may comprise one or more additional communication technologies with which the OOB functionalities described herein may be performed. According to some embodiments, the UWB transceiver 1835 may be one of a plurality of UWB transceivers of the mobile UWB device 1800. Further, the UWB transceiver may be used for functionality in addition to the UWB positioning functionality described herein. Although illustrated as part of the wireless communication interface 1830, the UWB transceiver 1835 may be separate from the wireless communication interface 1830 in some embodiments.

Depending on desired functionality, the wireless communication interface 1830 may comprise a separate receiver and transmitter, or any combination of transceivers, transmitters, and/or receivers to communicate with base stations (e.g., ng-eNBs and gNBs) and other terrestrial transceivers, such as wireless devices and access points. The mobile UWB device 1800 may communicate with different data networks that may comprise various network types. For example, a Wireless Wide Area Network (WWAN) may be a CDMA network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, a WiMAX (IEEE 802.16) network, and so on. A CDMA network may implement one or more RATs such as CDMA2000^{®}, WCDMA, and so on. CDMA2000^{®} includes IS-95, IS-2000 and/or IS-856 standards. A TDMA network may implement GSM, Digital Advanced Mobile Phone System (DAMPS), or some other RAT. An OFDMA network may employ LTE, LTE Advanced, 5G NR, and so on. 5G NR, LTE, LTE Advanced, GSM, and WCDMA are described in documents from 3GPP. CDMA2000^{®} is described in documents from a consortium named "3rd Generation Partnership Project 2" (3GPP2). 3GPP and 3GPP2 documents are publicly available. A wireless local area network (WLAN) may also be an IEEE 802.11x network, and a wireless personal area network (WPAN) may be a Bluetooth network, an IEEE 802.15x, or some other type of network. The techniques described herein may also be used for any combination of WWAN, WLAN and/or WPAN.

The mobile UWB device 1800 can further include sensor(s) 1840. Sensor(s) 1840 may comprise, without limitation, one or more inertial sensors and/or other sensors (e.g., accelerometer(s), gyroscope(s), camera(s), magnetometer(s), altimeter(s), microphone(s), proximity sensor(s), light sensor(s), barometer(s), and the like), some of which may be used to obtain position-related measurements and/or other information.

Embodiments of the mobile UWB device 1800 may also include a Global Navigation Satellite System (GNSS) receiver 1880 capable of receiving signals 1884 from one or more GNSS satellites using an antenna 1882 (which could be the same as antenna 1832). Positioning based on GNSS signal measurement can be utilized to complement and/or incorporate the techniques described herein. The GNSS receiver 1880 can extract the position of the mobile UWB device 1800, using conventional techniques, from GNSS satellites of a GNSS system, such as Global Positioning System (GPS), Galileo, GLONASS, Quasi-Zenith Satellite System (QZSS) over Japan, IRNSS over India, BeiDou Navigation Satellite System (BDS) over China, and/or the like. Moreover, the GNSS receiver 1880 can be used with various + storage device, a solid-state storage device, such as a random-access memory (RAM), and/or a read-only memory (ROM), which can be programmable, flash-updateable, and/or the like. Such storage devices may be configured to implement any appropriate data stores, including without limitation, various file systems, database structures, and/or the like.

The memory 1860 of the mobile UWB device 1800 also can comprise software elements (not shown in FIG. 18), including an operating system, device drivers, executable libraries, and/or other code, such as one or more application programs, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions in memory 1860 that are executable by the mobile UWB device 1800 (and/or processor(s) 1810 or DSP 1820 within mobile UWB device 1800). In some embodiments, then, such code and/or instructions can be used to configure and/or adapt a general-purpose computer (or other device) to perform one or more operations in accordance with the described methods.

**FIG. 19** is a block diagram of an embodiment of a stationary UWB device 1900, which can be utilized as described herein above. It should be noted that FIG. 19 is meant only to provide a generalized illustration of various components, any or all of which may be utilized as appropriate. In some embodiments, the UWB anchor 1900 may correspond to an anchor UWB having a known location, which may be used to determine the location of other UWB devices, including mobile UWB devices. According to some embodiments, the stationary UWB device 1900 may be permanently stationary or temporarily stationary.

The stationary UWB device 1900 is shown comprising hardware elements that can be electrically coupled via a bus 1905 (or may otherwise be in communication, as appropriate). The hardware elements may include a processor(s) 1910 which can include without limitation one or more general-purpose processors, one or more special-purpose processors (such as DSP chips, graphics acceleration processors, ASICs, and/or the like), and/or other processing structure or means. As shown in FIG. 19, some embodiments may have a separate DSP 1920, depending on desired functionality. Location determination and/or other determinations based on wireless communication may be provided in the processor(s) 1910 and/or wireless communication interface 1930 (discussed below), according to some embodiments. The stationary UWB device 1900 also can include one or more input devices, which can include without limitation a keyboard, display, mouse, microphone, button(s), dial(s), switch(es), and/or the like; and one or more output devices, which can include without limitation a display, light emitting diode (LED), speakers, and/or the like.

The stationary UWB device 1900 might also include a wireless communication interface 1930, which may comprise without limitation a modem, a network card, an infrared communication device, a wireless communication device, and/or a chipset (such as a Bluetooth^{®} device, an IEEE 802.11 device, an IEEE 802.15.4 device, a Wi-Fi device, a WiMAX device, cellular communication facilities, etc.), and/or the like, which may enable the stationary UWB device 1900 to communicate as described herein. The wireless communication interface 1930 may permit data and signaling to be communicated (e.g., transmitted and received) to UEs, other base stations/TRPs (e.g., eNBs, gNBs, and ng-eNBs), and/or other network components, computer systems, and/or any other electronic devices described herein. The communication can be carried out via one or more wireless communication antenna(s) 1932 that send and/or receive wireless signals 1934.

As illustrated, the wireless indication interface 1930 may further comprise a UWB transceiver 1935. The UWB transceiver 1935 may be operated to perform the UWB operations described herein. Further, the wireless communications interface 1930 may comprise one or more additional communication technologies with which the OOB functionalities described herein may be performed. According to some embodiments, the UWB transceiver 1935 may be one of a plurality of UWB transceivers of the mobile UWB device 1900. Further, the UWB transceiver may be used for functionality in addition to the UWB positioning functionality described herein. Although illustrated as part of the wireless communication interface 1930, the UWB transceiver 1935 may be separate from the wireless communication interface 1930 in some embodiments.

The stationary UWB device 1900 may also include a network interface 1980, which can include support of wireline communication technologies. The network interface 1980 may include a modem, network card, chipset, and/or the like. The network interface 1980 may include one or more input and/or output communication interfaces to permit data to be exchanged with a network, communication network servers, computer systems, and/or any other electronic devices described herein. In some embodiments, the stationary UWB device 1900 may be communicatively coupled with one or more servers and/or other stationary UWB devices via the network interface 1980.

In many embodiments, the stationary UWB device 1900 may further comprise a memory 1960. The memory 1960 can include, without limitation, local and/or network accessible storage, a disk drive, a drive array, an optical storage device, a solid-state storage device, such as a RAM, and/or a ROM, which can be programmable, flash-updateable, and/or the like. Such storage devices may be configured to implement any appropriate data stores, including without limitation, various file systems, database structures, and/or the like.

The memory 1960 of the stationary UWB device 1900 also may comprise software elements (not shown in FIG. 19), including an operating system, device drivers, executable libraries, and/or other code, such as one or more application programs, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions in memory 1960 that are executable by the stationary UWB device 1900 (and/or processor(s) 1910 or DSP 1920 within stationary UWB device 1900). In some embodiments, then, such code and/or instructions can be used to configure and/or adapt a general-purpose computer (or other device) to perform one or more operations in accordance with the described methods.

**FIG. 20** is a block diagram of an embodiment of a computer system 2000, which may be used, in whole or in part, to provide the functions of a server as described in the embodiments herein (e.g., server/CIE of FIGS. 10 and 14). It should be noted that FIG. 20 is meant only to provide a generalized illustration of various components, any or all of which may be utilized as appropriate. FIG. 20, therefore, broadly illustrates how individual system elements may be implemented in a relatively separated or relatively more integrated manner. In addition, it can be noted that components illustrated by FIG. 20 can be localized to a single device and/or distributed among various networked devices, which may be disposed at different geographical locations.

The computer system 2000 is shown comprising hardware elements that can be electrically coupled via a bus 2005 (or may otherwise be in communication, as appropriate). The hardware elements may include processor(s) 2010, which may comprise without limitation one or more general-purpose processors, one or more special-purpose processors (such as digital signal processing chips, graphics acceleration processors, and/or the like), and/or other processing structure, which can be configured to perform one or more of the methods described herein. The computer system 2000 also may comprise one or more input devices 2015, which may comprise without limitation a mouse, a keyboard, a camera, a microphone, and/or the like; and one or more output devices 2020, which may comprise without limitation a display device, a printer, and/or the like.

The computer system 2000 may further include (and/or be in communication with) one or more non-transitory storage devices 2025, which can comprise, without limitation, local and/or network accessible storage, and/or may comprise, without limitation, a disk drive, a drive array, an optical storage device, a solid-state storage device, such as a RAM and/or ROM, which can be programmable, flash-updateable, and/or the like. Such storage devices may be configured to implement any appropriate data stores, including without limitation, various file systems, database structures, and/or the like. Such data stores may include database(s) and/or other data structures used store and administer messages and/or other information to be sent to one or more devices via hubs, as described herein.

The computer system 2000 may also include a communications subsystem 2030, which may (optionally, as indicated by dotted lines) comprise wireless communication technologies managed and controlled by a wireless communication interface 2033, as well as wired technologies (such as Ethernet, coaxial communications, universal serial bus (USB), and the like). The wireless communication interface 2033 may comprise one or more wireless transceivers that may send and receive wireless signals 2055 (e.g., signals according to 5G NR or LTE) via wireless antenna(s) 2050. Optionally, these one or more wireless transceivers may comprise a UWB transceiver 2034. Thus the communications subsystem 2030 may comprise a modem, a network card (wireless or wired), an infrared communication device, a wireless communication device, and/or a chipset, and/or the like, which may enable the computer system 2000 to communicate on any or all of the communication networks described herein to any device on the respective network. Hence, the communications subsystem 2030 may be used to receive and send data as described in the embodiments herein.

In many embodiments, the computer system 2000 will further comprise a working memory 2035, which may comprise a RAM or ROM device, as described above. Software elements, shown as being located within the working memory 2035, may comprise an operating system 2040, device drivers, executable libraries, and/or other code, such as one or more applications 2045, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general-purpose computer (or other device) to perform one or more operations in accordance with the described methods.

A set of these instructions and/or code might be stored on a non-transitory computer-readable storage medium, such as the storage device(s) 2025 described above. In some cases, the storage medium might be incorporated within a computer system, such as computer system 2000. In other embodiments, the storage medium might be separate from a computer system (e.g., a removable medium, such as an optical disc), and/or provided in an installation package, such that the storage medium can be used to program, configure, and/or adapt a general-purpose computer with the instructions/code stored thereon. These instructions might take the form of executable code, which is executable by the computer system 2000 and/or might take the form of source and/or installable code, which, upon compilation and/or installation on the computer system 2000 (e.g., using any of a variety of generally available compilers, installation programs, compression/decompression utilities, etc.), then takes the form of executable code.

It will be apparent to those skilled in the art that substantial variations may be made in accordance with specific requirements. For example, customized hardware might also be used and/or particular elements might be implemented in hardware, software (including portable software, such as applets, etc.), or both. Further, connection to other computing devices such as network input/output devices may be employed.

With reference to the appended figures, components that can include memory can include non-transitory machine-readable media. The term "machine-readable medium" and "computer-readable medium" as used herein, refer to any storage medium that participates in providing data that causes a machine to operate in a specific fashion. In embodiments provided hereinabove, various machine-readable media might be involved in providing instructions/code to processors and/or other device(s) for execution. Additionally or alternatively, the machine-readable media might be used to store and/or carry such instructions/code. In many implementations, a computer-readable medium is a physical and/or tangible storage medium. Such a medium may take many forms, including but not limited to, non-volatile media and volatile media. Common forms of computer-readable media include, for example, magnetic and/or optical media, any other physical medium with patterns of holes, a RAM, a programmable ROM (PROM), erasable PROM (EPROM), a FLASH-EPROM, any other memory chip or cartridge, or any other medium from which a computer can read instructions and/or code.

The methods, systems, and devices discussed herein are examples. Various embodiments may omit, substitute, or add various procedures or components as appropriate. For instance, features described with respect to certain embodiments may be combined in various other embodiments. Different aspects and elements of the embodiments may be combined in a similar manner. The various components of the figures provided herein can be embodied in hardware and/or software. Also, technology evolves and, thus many of the elements are examples that do not limit the scope of the disclosure to those specific examples.

It has proven convenient at times, principally for reasons of common usage, to refer to such signals as bits, information, values, elements, symbols, characters, variables, terms, numbers, numerals, or the like. It should be understood, however, that all of these or similar terms are to be associated with appropriate physical quantities and are merely convenient labels. Unless specifically stated otherwise, as is apparent from the discussion above, it is appreciated that throughout this Specification discussion utilizing terms such as "processing," "computing," "calculating," "determining," "ascertaining," "identifying," "associating," "measuring," "performing," or the like refer to actions or processes of a specific apparatus, such as a special purpose computer or a similar special purpose electronic computing device. In the context of this Specification, therefore, a special purpose computer or a similar special purpose electronic computing device is capable of manipulating or transforming signals, typically represented as physical electronic, electrical, or magnetic quantities within memories, registers, or other information storage devices, transmission devices, or display devices of the special purpose computer or similar special purpose electronic computing device.

Terms, "and" and "or" as used herein, may include a variety of meanings that also is expected to depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean any combination of A, B, and/or C, such as A, AB, AA, AAB, AABBCCC, etc.

## Claims

1. A method of coordinating hybrid New Radio, NR/ultra-wideband, UWB, positioning sessions for a mobile device, the method comprising:
receiving (1610), at the mobile device, a UWB positioning session configuration message from each of one or more UWB anchor devices;
determining (1620), at the mobile device, to perform hybrid NR/UWB positioning of the mobile device; and
initiating (1630), with the mobile device, the hybrid NR/UWB positioning of the mobile device, wherein initiating the hybrid NR/UWB positioning of the mobile device comprises:
sending the LMF a request for setup information for the hybrid NR/UWB positioning of the mobile device; and
receiving, from the LMF, a list of preferred devices with which to conduct an NR positioning session and a UWB positioning session;
conducting an NR positioning session with a Location Management Function, LMF, of a NR network; and
conducting a UWB positioning session with each of at least a subset of the one or more UWB anchor devices, wherein each UWB anchor device of the at least the subset of the one or more UWB anchor devices is included on the list of preferred devices.

2. The method of claim 1, wherein conducting the NR positioning session comprises sending one or more parameters for the NR positioning session to the LMF, and wherein the one or more parameters are based, at least in part, on the UWB positioning session with each of at least the subset of the one or more UWB anchor devices.

3. The method of claim 2, wherein the one or more parameters comprise a timing of transmission of one or more NR positioning signals used in the NR positioning session, a frequency of transmission of the one or more NR positioning signals in the NR positioning session, or both.

4. The method of claim 1, wherein conducting the UWB positioning session with each of at least the subset of the one or more UWB anchor devices comprises sending one or more parameters to each of at least the subset of the one or more UWB anchor devices, and wherein the one or more parameters are based, at least in part, on the NR positioning session, optionally, wherein the one or more parameters comprise a timing of transmission of one or more UWB positioning signals, a frequency of transmission of the one or more UWB positioning signals, or both..

5. The method of claim 1, wherein determining to perform the hybrid NR/UWB positioning of the mobile device is based at least in part on the mobile device determining:
spoofing is occurring over an NR connection of the mobile device,
a position accuracy requirement related to the positioning of the mobile device comprises an accuracy above a threshold value,
a power requirement related to the positioning of the mobile device is below a threshold value,
the positioning of the mobile device includes a precision requirement,
the positioning of the mobile device includes a latency requirement, or
a combination thereof.

6. The method of claim 1, wherein initiating the hybrid NR/UWB positioning of the mobile device comprises sending a server UWB session setup information, from the mobile device, to initiate the UWB positioning session with each of the at least the subset of the one or more UWB anchor devices.

7. The method of claim 6, wherein the server comprises the LMF, optionally further comprising requesting, by the mobile device, an on-demand positioning reference signal, PRS, for the NR positioning session.

8. A method of coordinating a hybrid New Radio, NR/ultra-wideband, UWB, positioning session for a mobile device, the method comprising:
obtaining (1710), at a Location Management Function, LMF, of an NR network, information regarding UWB positioning capability of the mobile device;
conducting (1720) an NR positioning session with the mobile device;
detecting (1730), with the LMF, a triggering event for conducting the hybrid NR/UWB positioning session for the mobile device; and
responsive to detecting the triggering event, sending (1740) a request from the LMF to a UWB management server to initiate a UWB positioning session between the mobile device and each of one or more UWB anchor devices;
receiving, at the LMF from the UWB management server, a list of one or more preferred UWB devices;
determining, with the LMF, one or more preferred NR devices with which the mobile device is to conduct the NR positioning session; and
sending, from the LMF to the mobile device, a list of preferred devices comprising the one or more preferred UWB devices and the one or more preferred NR devices.

9. The method of claim 8, further comprising sending a positioning reference signal, PRS, configuration for the mobile device from the LMF to the UWB management server.

10. The method of claim 8, wherein detecting the triggering event comprises determining, with the LMF:
spoofing is occurring over an NR connection of the mobile device,
position accuracy requirement related to the positioning of the mobile device comprises an accuracy above a threshold value,
a power requirement related to the positioning of the mobile device is below a threshold value
a precision requirement, or
a latency requirement, or
a combination thereof.

11. The method of claim 8, wherein detecting the triggering event comprises determining, with the LMF, a location of the mobile device is in, or within a threshold distance of, coverage area a served by a UWB infrastructure managed by the UWB management server.

12. The method of claim 8, wherein the list of one or more preferred UWB devices includes the one or more UWB anchor devices.

13. A mobile device for coordinating hybrid New Radio, NR/ultra-wideband, UWB, positioning sessions for a mobile device, the mobile device comprising:
a transceiver;
a memory; and
one or more processors communicatively coupled with the transceiver and the memory, wherein the one or more processors are configured to:
receive (1610), via the transceiver, a UWB positioning session configuration message from each of one or more UWB anchor devices;
determine (1620) to perform hybrid NR/UWB positioning of the mobile device; and
initiate (1630) the hybrid NR/UWB positioning of the mobile device, wherein, to initiate the hybrid NR/UWB positioning of the mobile device, the one or more processors are configured to:
send the LMF a request for setup information for the hybrid NR/UWB positioning of the mobile device; and
receive, from the LMF, a list of preferred devices with which to conduct an NR positioning session and a UWB positioning session;
conduct an NR positioning session with a Location Management Function, LMF, of a NR network; and
conduct a UWB positioning session with each of at least a subset of the one or more UWB anchor devices, wherein each UWB anchor device of the at least the subset of the one or more UWB anchor devices is included on the list of preferred devices.

14. A Location Management Function, LMF, for coordinating a hybrid New Radio, NR/ultra-wideband, UWB, positioning session for a mobile device, the LMF comprising:
a transceiver;
a memory; and
one or more processors communicatively coupled with the transceiver and the memory, wherein the one or more processors are configured to:
obtain (1710) information regarding UWB positioning capability of the mobile device;
conduct (1720) an NR positioning session with the mobile device;
detect (1730) a triggering event for conducting the hybrid NR/UWB positioning session for the mobile device; and
responsive to detecting the triggering event, send (1740) a request via the transceiver to a UWB management server to initiate a UWB positioning session between the mobile device and each of one or more UWB anchor devices;
receive, at the LMF from the UWB management server, a list of one or more preferred UWB devices;
determine, with the LMF, one or more preferred NR devices with which the mobile device is to conduct the NR positioning session; and
send, from the LMF to the mobile device, a list of preferred devices comprising the one or more preferred UWB devices and the one or more preferred NR devices.

15. A non-transitory computer-readable medium having instructions embedded thereon, which, when executed by one or more processors, cause the one or more processors to perform the method of any of claims 1 to 7 or having instructions embedded thereon, which, when executed by one or more processors, cause the one or more processors to perform the method of any of claims 8 to 12.

## Patentansprüche

1. Verfahren zum Koordinieren von hybriden NR-(New Radio)/UWB-(Ultra-Wideband)-Ortungssitzungen für ein mobiles Gerät, wobei das Verfahren Folgendes beinhaltet:
Empfangen (1610), an dem mobilen Gerät, einer UWB-Ortungssitzungskonfigurationsnachricht von jedem von einem oder mehreren UWB-Ankergeräten;
Bestimmen (1620), an dem mobilen Gerät, eine hybride NR/UWB-Ortung des mobilen Geräts durchzuführen; und
Initiieren (1630), mit dem mobilen Gerät, der hybriden NR/UWB-Ortung des mobilen Geräts, wobei das Initiieren der hybriden NR/UWB-Ortung des mobilen Geräts Folgendes beinhaltet:
Senden einer Einrichtungsinformationsanforderung für die hybride NR/UWB-Ortung des mobilen Geräts zu der LMF; und
Empfangen, von der LMF, einer Liste bevorzugter Geräte, mit denen eine NR-Ortungssitzung und eine UWB-Ortungssitzung durchgeführt werden sollen;
Durchführen einer NR-Ortungssitzung mit einer LMF (Location Management Function) eines NR-Netzwerks; und
Durchführen einer UWB-Ortungssitzung mit jedem von wenigstens einem Teilsatz der ein oder mehreren UWB-Ankergeräte, wobei jedes UWB-Ankergerät des mindestens Teilsatzes der ein oder mehreren UWB-Ankergeräte in der Liste bevorzugter Geräte enthalten ist.

2. Verfahren nach Anspruch 1, wobei das Durchführen der NR-Ortungssitzung das Senden eines oder mehrerer Parameter für die NR-Ortungssitzung zu der LMF umfasst, und wobei die ein oder mehreren Parameter zumindest teilweise auf der UWB-Ortungssitzung mit jedem des mindestens Teilsatzes der ein oder mehreren UWB-Ankergeräte basieren.

3. Verfahren nach Anspruch 2, wobei die ein oder mehreren Parameter einen Zeitpunkt der Übertragung eines oder mehrerer in der NR-Ortungssitzung verwendeter NR-Ortungssignale, eine Übertragungsfrequenz der ein oder mehreren NR-Ortungssignale in der NR-Ortungssitzung oder beides umfassen.

4. Verfahren nach Anspruch 1, wobei das Durchführen der UWB-Ortungssitzung mit jedem des mindestens Teilsatzes der ein oder mehreren UWB-Ankergeräte das Senden eines oder mehrerer Parameter zu jedem des mindestens Teilsatzes der ein oder mehreren UWB-Ankergeräte beinhaltet, und wobei die ein oder mehreren Parameter zumindest teilweise auf der NR-Ortungssitzung basieren, wobei optional die ein oder mehreren Parameter einen Zeitpunkt der Übertragung eines oder mehrerer UWB-Ortungssignale, eine Übertragungsfrequenz der ein oder mehreren UWB-Ortungssignale oder beides umfassen.

5. Verfahren nach Anspruch 1, wobei die Bestimmung, die hybride NR/UWB-Ortung des mobilen Geräts durchzuführen, zumindest teilweise darauf basiert, dass das mobile Gerät Folgendes feststellt:
Spoofing findet über eine NR-Verbindung des mobilen Geräts statt,
eine Positionsgenauigkeitsanforderung in Bezug auf die Ortung des mobilen Geräts umfasst eine Genauigkeit über einem Schwellenwert,
eine Leistungsanforderung in Bezug auf die Ortung des mobilen Geräts liegt unter einem Schwellenwert,
die Ortung des mobilen Geräts enthält eine Präzisionsanforderung,
die Ortung des mobilen Geräts enthält eine Latenzanforderung oder
eine Kombination davon.

6. Verfahren nach Anspruch 1, wobei das Initiieren der hybriden NR/UWB-Ortung des mobilen Geräts das Senden von UWB-Sitzungseinrichtungsinformationen von dem mobilen Gerät zu einem Server zum Initiieren der UWB-Ortungssitzung mit jedem des mindestens Teilsatzes der ein oder mehreren UWB-Ankergeräte beinhaltet.

7. Verfahren nach Anspruch 6, wobei der Server die LMF umfasst, das optional ferner das Anfordern, durch das mobile Gerät, eines On-Demand-PRS (Positioning Reference Signal) für die NR-Ortungssitzung umfasst.

8. Verfahren zum Koordinieren einer hybriden NR-(New Radio)/UWB-(Ultra-Wideband)-Ortungssitzung für ein mobiles Gerät, wobei das Verfahren Folgendes beinhaltet:
Erhalten (1710), an einer LMF (Location Management Function) eines NR-Netzwerks, von Informationen bezüglich der UWB-Ortungsfähigkeit des mobilen Geräts;
Durchführen (1720) einer NR-Ortungssitzung mit dem mobilen Gerät;
Erkennen (1730), mit der LMF, eines Auslöseereignisses zum Durchführen der hybriden NR/UWB-Ortungssitzung für das mobile Gerät; und
Senden (1740), als Reaktion auf das Erkennen des Auslöseereignisses, einer Anforderung von der LMF zu einem UWB-Management-Server zum Initiieren einer UWB-Ortungssitzung zwischen dem mobilen Gerät und jedem von einem oder mehreren UWB-Ankergeräten;
Empfangen einer Liste eines oder mehrerer bevorzugter UWB-Geräte vom UWB-Management-Server an der LMF;
Bestimmen, mit der LMF, eines oder mehrerer bevorzugter NR-Geräte, mit denen das mobile Gerät die NR-Ortungssitzung durchführen soll; und
Senden, von der LMF zu dem mobilen Gerät, einer Liste bevorzugter Geräte, die die ein oder mehreren bevorzugten UWB-Geräte und die ein oder mehreren bevorzugten NR-Geräte umfasst.

9. Verfahren nach Anspruch 8, das ferner das Senden einer PRS-(Positioning Reference Signal)-Konfiguration für das mobile Gerät von der LMF zum UWB-Management-Server beinhaltet.

10. Verfahren nach Anspruch 8, wobei das Erkennen des Auslöseereignisses das Feststellen, mit der LMF, beinhaltet:
ob eine Spoofing-Attacke über eine NR-Verbindung des mobilen Geräts stattfindet,
ob eine Positionsgenauigkeitsanforderung in Bezug auf die Ortung des mobilen Geräts eine Genauigkeit über einem Schwellenwert umfasst,
ob eine Leistungsanforderung in Bezug auf die Ortung des mobilen Geräts unter einem Schwellenwert liegt,
einer Präzisionsanforderung oder
einer Latenzanforderung oder
einer Kombination davon.

11. Verfahren nach Anspruch 8, wobei das Erkennen des Auslöseereignisses das Feststellen, mit der LMF, beinhaltet, dass sich ein Standort des mobilen Geräts in oder innerhalb einer Schwellenentfernung von einem Versorgungsbereich befindet, der von einer vom UWB-Management-Server verwalteten UWB-Infrastruktur bedient wird.

12. Verfahren nach Anspruch 8, wobei die Liste eines oder mehrerer bevorzugter UWB-Geräte die ein oder mehreren UWB-Ankergeräte umfasst.

13. Mobiles Gerät zum Koordinieren von hybriden NR-(New Radio)/UWB-(Ultra-Wideband)-Ortungssitzungen für ein mobiles Gerät, wobei das mobile Gerät Folgendes umfasst:
einen Transceiver;
einen Speicher; und
einen oder mehrere Prozessoren, die mit dem Transceiver und dem Speicher kommunikativ gekoppelt sind, wobei die ein oder mehreren Prozessoren konfiguriert sind zum:
Empfangen (1610), über den Transceiver, einer UWB-Ortungssitzungskonfigurationsnachricht von jedem von einem oder mehreren UWB-Ankergeräten;
Bestimmen (1620), eine hybride NR/UWB-Ortung des mobilen Geräts durchzuführen; und
Initiieren (1630) der hybriden NR/UWB-Ortung des mobilen Geräts, wobei zum Initiieren der hybriden NR/UWB-Ortung des mobilen Geräts die ein oder mehreren Prozessoren konfiguriert sind zum:
Senden einer Anforderung von Einrichtungsinformationen für die hybride NR/UWB-Ortung des mobilen Geräts zu der LMF; und
Empfangen, von der LMF, einer Liste bevorzugter Geräte, mit denen eine NR-Ortungssitzung und eine UWB-Ortungssitzung durchgeführt werden sollen;
Durchführen einer NR-Ortungssitzung mit einer LMF (Location Management Function) eines NR-Netzwerks; und
Durchführen einer UWB-Ortungssitzung mit jedem von wenigstens einem Teilsatz der ein oder mehreren UWB-Ankergeräte, wobei jedes UWB-Ankergerät des mindestens Teilsatzes der ein oder mehreren UWB-Ankergeräte in der Liste bevorzugter Geräte enthalten ist.

14. LMF (Location Management Function) zum Koordinieren einer hybriden NR-(New Radio)/UWB-(Ultra-Wideband)-Ortungssitzung für ein mobiles Gerät, wobei die LMF Folgendes umfasst:
einen Transceiver;
einen Speicher; und
einen oder mehrere Prozessoren, die mit dem Transceiver und dem Speicher kommunikativ gekoppelt sind, wobei die ein oder mehreren Prozessoren konfiguriert sind zum:
Erhalten (1710) von Informationen bezüglich der UWB-Ortungsfähigkeit des mobilen Geräts;
Durchführen (1720) einer NR-Ortungssitzung mit dem mobilen Gerät;
Erkennen (1730) eines Auslöseereignisses zum Durchführen der hybriden NR/UWB-Ortungssitzung für das mobile Gerät; und
Senden (1740), als Reaktion auf das Erkennen des Auslöseereignisses, einer Anforderung über den Transceiver zu einem UWB-Management-Server zum Initiieren einer UWB-Ortungssitzung zwischen dem mobilen Gerät und jedem von einem oder mehreren UWB-Ankergeräten;
Empfangen einer Liste eines oder mehrerer bevorzugter UWB-Geräte vom UWB-Management-Server an der LMF;
Bestimmen, mit der LMF, eines oder mehrerer bevorzugter NR-Geräte, mit denen das mobile Gerät die NR-Ortungssitzung durchführen soll; und
Senden, von der LMF zu dem mobilen Gerät, einer Liste bevorzugter Geräte, die die ein oder mehreren bevorzugten UWB-Geräte und die ein oder mehreren bevorzugten NR-Geräte umfasst.

15. Nichtflüchtiges, computerlesbares Medium mit darauf eingebetteten Befehlen, die bei Ausführung durch einen oder mehrere Prozessoren die ein oder mehreren Prozessoren zum Durchführen des Verfahrens nach einem der Ansprüche 1 bis 7 veranlassen, oder mit darauf eingebetteten Befehlen, die bei Ausführung durch einen oder mehrere Prozessoren die ein oder mehreren Prozessoren zum Durchführen des Verfahrens nach einem der Ansprüche 8 bis 12 veranlassen.

## Revendications

1. Procédé de coordination de sessions de positionnement hybride Nouvelle Radio, NR/ultralarge bande, UWB, pour un dispositif mobile, le procédé comprenant :
la réception (1610), au niveau du dispositif mobile, d'un message de configuration de session de positionnement UWB depuis chacun d'un ou plusieurs dispositifs d'ancrage UWB ;
la détermination (1620), au niveau du dispositif mobile, de réaliser un positionnement hybride NR/UWB du dispositif mobile ; et
le lancement (1630), avec le dispositif mobile, du positionnement hybride NR/UWB du dispositif mobile, dans lequel le lancement du positionnement hybride NR/UWB du dispositif mobile comprend :
l'envoi à la LMF d'une demande d'informations de configuration pour le positionnement hybride NR/UWB du dispositif mobile ; et
la réception, depuis la LMF, d'une liste de dispositifs préférés avec lesquels réaliser une session de positionnement NR et une session de positionnement UWB ;
la réalisation d'une session de positionnement NR avec une fonction de gestion de localisation, LMF, d'un réseau NR ; et
la réalisation d'une session de positionnement UWB avec chacun d'au moins un sous-ensemble des un ou plusieurs dispositifs d'ancrage UWB, dans lequel chaque dispositif d'ancrage UWB de l'au moins un sous-ensemble des un ou plusieurs dispositifs d'ancrage UWB est inclus dans la liste de dispositifs préférés.

2. Procédé selon la revendication 1, dans lequel la réalisation de la session de positionnement NR comprend l'envoi d'un ou plusieurs paramètres de la session de positionnement NR à la LMF, et dans lequel les un ou plusieurs paramètres sont basés, au moins en partie, sur la session de positionnement UWB avec chacun d'au moins le sous-ensemble des un ou plusieurs dispositifs d'ancrage UWB.

3. Procédé selon la revendication 2, dans lequel les un ou plusieurs paramètres comprennent une synchronisation de transmission d'un ou plusieurs signaux de positionnement NR utilisés dans la session de positionnement NR, une fréquence de transmission des un ou plusieurs signaux de positionnement NR dans la session de positionnement NR, ou les deux.

4. Procédé selon la revendication 1, dans lequel la réalisation de la session de positionnement UWB avec chacun d'au moins le sous-ensemble des un ou plusieurs dispositifs d'ancrage UWB comprend l'envoi d'un ou plusieurs paramètres à chacun d'au moins le sous-ensemble des un ou plusieurs dispositifs d'ancrage UWB, et dans lequel les un ou plusieurs paramètres sont basés, au moins en partie, sur la session de positionnement NR, éventuellement, dans lequel les un ou plusieurs paramètres comprennent une synchronisation de transmission d'un ou plusieurs signaux de positionnement UWB, une fréquence de transmission des un ou plusieurs signaux de positionnement UWB, ou les deux.

5. Procédé selon la revendication 1, dans lequel la détermination de réaliser le positionnement hybride NR/UWB du dispositif mobile est basée au moins en partie sur la détermination par le dispositif mobile :
qu'une usurpation d'identité a lieu sur une connexion NR du dispositif mobile,
qu'une exigence de précision de position liée au positionnement du dispositif mobile comprend une précision supérieure à une valeur seuil,
qu'une exigence de puissance liée au positionnement du dispositif mobile est inférieure à une valeur seuil,
que le positionnement du dispositif mobile comporte une exigence de précision,
que le positionnement du dispositif mobile comporte une exigence de latence, ou
une combinaison de ceux-ci.

6. Procédé selon la revendication 1, dans lequel le lancement du positionnement hybride NR/UWB du dispositif mobile comprend l'envoi d'informations d'établissement de session UWB à un serveur, depuis le dispositif mobile, pour lancer la session de positionnement UWB avec chacun de l'au moins un sous-ensemble des un ou plusieurs dispositifs d'ancrage UWB.

7. Procédé selon la revendication 6, dans lequel le serveur comprend la LMF, comprenant en outre éventuellement la demande, par le dispositif mobile, d'un signal de référence de positionnement, PRS, à la demande, pour la session de positionnement NR.

8. Procédé de coordination d'une session de positionnement hybride New Radio, NR/ultralarge bande, UWB, pour un dispositif mobile, le procédé comprenant :
l'obtention (1710), au niveau d'une fonction de gestion de localisation, LMF, d'un réseau NR, d'informations concernant une capabilité de positionnement UWB du dispositif mobile ;
la réalisation (1720) d'une séance de positionnement NR avec le dispositif mobile ;
la détection (1730), avec la LMF, d'un événement déclencheur pour la réalisation de la session de positionnement hybride NR/UWB pour le dispositif mobile ; et
en réponse à la détection de l'événement déclencheur, l'envoi (1740) par la LMF à un serveur de gestion UWB d'une demande de lancement d'une session de positionnement UWB entre le dispositif mobile et chacun d'un ou plusieurs dispositifs d'ancrage UWB ;
la réception, au niveau de la LMF depuis le serveur de gestion UWB, d'une liste d'un ou plusieurs dispositifs UWB préférés ;
la détermination, avec la LMF, d'un ou plusieurs dispositifs NR préférés avec lesquels le dispositif mobile doit réaliser la session de positionnement NR ; et
l'envoi, à partir de la LMF au dispositif mobile, d'une liste de dispositifs préférés comprenant les un ou plusieurs dispositifs UWB préférés et les un ou plusieurs dispositifs NR préférés.

9. Procédé selon la revendication 8, comprenant en outre l'envoi d'une configuration de signal de référence de positionnement, PRS, pour le dispositif mobile par la LMF au serveur de gestion UWB.

10. Procédé selon la revendication 8, dans lequel la détection de l'événement déclencheur comprend la détermination, avec la LMF :
qu'une usurpation d'identité a lieu sur une connexion NR du dispositif mobile,
qu'une exigence de précision de position liée au positionnement du dispositif mobile comprend une précision supérieure à une valeur seuil,
qu'une exigence de puissance liée au positionnement du dispositif mobile est inférieure à une valeur seuil,
d'une exigence de précision, ou
d'une exigence de latence, ou
d'une combinaison de ceux-ci.

11. Procédé selon la revendication 8, dans lequel la détection de l'événement déclencheur comprend la détermination, avec la LMF, qu'un emplacement du dispositif mobile se trouve dans une zone de couverture desservie par une infrastructure UWB gérée par le serveur de gestion UWB, ou en-deçà d'une distance seuil de celle-ci.

12. Procédé selon la revendication 8, dans lequel la liste d'un ou plusieurs dispositifs UWB préférés comporte les un ou plusieurs dispositifs d'ancrage UWB.

13. Dispositif mobile de coordination de sessions de positionnement hybride Nouvelle Radio, NR/ultralarge bande, UWB, pour un dispositif mobile, le dispositif mobile comprenant :
un émetteur-récepteur ;
une mémoire ; et
un ou plusieurs processeurs couplés en communication à l'émetteur-récepteur et à la mémoire, dans lequel les un ou plusieurs processeurs sont configurés pour :
recevoir (1610), via l'émetteur-récepteur, un message de configuration de session de positionnement UWB depuis chacun d'un ou plusieurs dispositifs d'ancrage UWB ;
déterminer (1620) de réaliser un positionnement hybride NR/UWB du dispositif mobile ; et
lancer (1630) le positionnement hybride NR/UWB du dispositif mobile, dans lequel, pour lancer le positionnement hybride NR/UWB du dispositif mobile, les un ou plusieurs processeurs sont configurés pour :
envoyer à la LMF une demande d'informations d'établissement pour le positionnement hybride NR/UWB du dispositif mobile ; et
recevoir, depuis la LMF, une liste de dispositifs préférés avec lesquels réaliser une session de positionnement NR et une session de positionnement UWB ;
réaliser une session de positionnement NR avec une fonction de gestion d'emplacement, LMF, d'un réseau NR ; et
réaliser une session de positionnement UWB avec chacun d'au moins un sous-ensemble des un ou plusieurs dispositifs d'ancrage UWB, dans lequel chaque dispositif d'ancrage UWB de l'au moins un sous-ensemble des un ou plusieurs dispositifs d'ancrage UWB est inclus dans la liste de dispositifs préférés.

14. Fonction de gestion d'emplacement, LMF, pour coordonner une session de positionnement hybride Nouvelle Radio, NR/ultra-large bande, UWB, pour un dispositif mobile, la LMF comprenant :
un émetteur-récepteur ;
une mémoire ; et
un ou plusieurs processeurs couplés en communication à l'émetteur-récepteur et à la mémoire, dans lequel les un ou plusieurs processeurs sont configurés pour :
obtenir (1710) des informations concernant une capabilité de positionnement UWB du dispositif mobile ;
réaliser (1720) une séance de positionnement NR avec le dispositif mobile ;
détecter (1730) un événement déclencheur pour réaliser la session de positionnement hybride NR/UWB pour le dispositif mobile ; et
en réponse à la détection de l'événement déclencheur, envoyer (1740) via l'émetteur-récepteur à un serveur de gestion UWB une demande de lancement d'une session de positionnement UWB entre le dispositif mobile et chacun d'un ou plusieurs dispositifs d'ancrage UWB ;
recevoir, au niveau de la LMF depuis le serveur de gestion UWB, une liste d'un ou plusieurs dispositifs UWB préférés ;
déterminer, avec la LMF, un ou plusieurs dispositifs NR préférés avec lesquels le dispositif mobile doit réaliser la session de positionnement NR ; et
envoyer, par la LMF au dispositif mobile, une liste de dispositifs préférés comprenant les un ou plusieurs dispositifs UWB préférés et les un ou plusieurs dispositifs NR préférés.

15. Support non transitoire lisible par ordinateur comportant des instructions intégrées qui, une fois exécutées par un ou plusieurs processeurs, amènent les un ou plusieurs processeurs à réaliser le procédé selon l'une quelconque des revendications 1 à 7, ou comportant des instructions intégrées qui, une fois exécutées par un ou plusieurs processeurs, amènent les un ou plusieurs processeurs à réaliser le procédé selon l'une des revendications 8 à 12.
